(19) Europäisches Patentamt
European Patent Office
Office européen des brevets

(11) **EP 2 527 072 B1**

(12) **EUROPÄISCHE PATENTSCHRIFT**

(45) Veröffentlichungstag und Bekanntmachung des Hinweises auf die Patenterteilung:
**24.01.2018   Patentblatt 2018/04**

(51) Int Cl.:
***B23F 5/16*** *(2006.01)*          ***B23F 21/04*** *(2006.01)*

(21) Anmeldenummer: **11173901.7**

(22) Anmeldetag: **14.07.2011**

(54) **Verfahren zum Wälzschälen von Aussenverzahnungen und Vorrichtung mit entsprechendem Wälzschälwerkzeug**

Method for hob peeling external gears and device with hop peeling tool

Procédé et dispositif d'écroutage de dentures extérieures, et dispositif avec outil d'écroutage correspondant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2011   EP 11167703**

(43) Veröffentlichungstag der Anmeldung:
**28.11.2012   Patentblatt 2012/48**

(73) Patentinhaber: **Klingelnberg AG**
**8050 Zürich (CH)**

(72) Erfinder: **Vogel, Olaf**
**76275 Ettlingen (DE)**

(74) Vertreter: **Heusch, Christian et al**
**Ant-IP GmbH**
**Kirchplatz 2**
**82387 Antdorf (DE)**

(56) Entgegenhaltungen:
WO-A1-2010/060733     DE-A1- 2 719 524
DE-C- 243 514         US-A- 5 443 338

**Beschreibung**

Gebiet der Erfindung

Gegenstand der Erfindung ist ein Verfahren zum Wälzschälen einer Aussenverzahnung oder einer anderen aussenliegenden periodischen Struktur und eine Vorrichtung mit einem entsprechenden Wälzschälwerkzeug.

Hintergrund der Erfindung, Stand der Technik

Es gibt zahlreiche Verfahren zur Fertigung von Zahnrädern. Bei der spanenden Weichvorbearbeitung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wird.

Bei der spanenden Herstellung von Zahnrädern unterscheidet man zwischen dem Einzelteilverfahren (auch intermittierendes Teilverfahren und im Englischen intermitted indexing process oder single indexing process genannt) und dem kontinuierlichen Verfahren, das teilweise auch als kontinuierliches Teilungsverfahren (im Englischen continuous indexing process, oder face hobbing genannt) bezeichnet wird.

Beim kontinuierlichen Verfahren kommt beispielsweise ein Werkzeug mit entsprechenden Messern zum Einsatz, um die Flanken eines Werkstücks zu schneiden. Das Werkstück wird in einer Aufspannung kontinuierlich, d.h. im pausenlosen Verfahren fertig geschnitten. Das kontinuierliche Verfahren basiert auf komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten, respektive gekoppelten Antreiben mehrerer Achsantriebe einer entsprechenden Maschine.

Beim Einzelteilverfahren wird eine Zahnlücke bearbeitet, dann erfolgen zum Beispiel eine relative Bewegung des Werkzeugs und eine sogenannte Teilungsbewegung (Teilungsdrehung), bei der sich das Werkstück relativ zum Werkzeug dreht, bevor dann die nächste Zahnlücke bearbeitet wird. Es wird so Schritt für Schritt ein Zahnrad gefertigt.

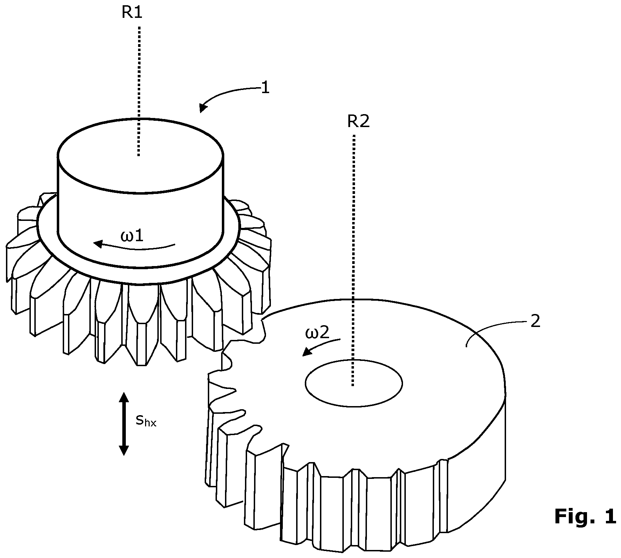

Das eingangs genannte Wälzstossverfahren kann durch ein Zylinderradgetriebe beschrieben oder dargestellt werden, da der Kreuzungswinkel (auch Achskreuzwinkel genannt) zwischen der Rotationsachse R1 des Stosswerkzeugs 1 und der Rotationsachse R2 des Werkstücks 2 Null Grad beträgt, wie in Fig. 1 schematisch dargestellt. Die beiden Rotationsachsen R1 und R2 verlaufen parallel, wenn der Achskreuzwinkel Null Grad beträgt. Das Werkstück 2 und das Stosswerkzeug 1 drehen sich kontinuierlich um ihre Rotationsachsen R2, bzw. R1. Das Stosswerkzeug 1 macht zusätzlich zu der Drehbewegung eine Hubbewegung, die in Fig. 1 durch den Doppelpfeil $S_{hx}$ bezeichnet ist, und nimmt bei dieser Hubbewegung Späne vom Werkstück 2 ab.

Vor einiger Zeit wurde ein Verfahren erneut aufgegriffen, das als Wälzschälen bezeichnet wird. Die Grundlagen sind circa 100 Jahre alt. Eine erste Patentanmeldung mit der Nummer DE 243514 zu diesem Thema geht auf das Jahr 1912 zurück. DE 243514 dient als nächstliegender Stand der Technik. Nach den ursprünglichen Überlegungen und Untersuchungen der Anfangsjahre wurde das Wälzschälen nicht mehr ernsthaft weiter verfolgt. Es waren bisher aufwendige Prozesse, die teilweise empirisch waren, notwendig, um eine geeignete Werkzeuggeometrie für das Wälzschälverfahren zu finden.

Ungefähr Mitte der 1980er Jahre wurde das Wälzschälen erneut aufgegriffen. Erst mit den heutigen Simulationsverfahren und den modernen CNC-Steuerungen der Maschinen, konnte das Prinzip des Wälzschälens in ein produktives, reproduzierbares und robustes Verfahren umgesetzt werden. Hinzu kommen die hohe Verschleißfestigkeit heutiger Werkzeugmaterialien, die enorm hohe statische und dynamische Steifigkeit und die hohe Güte des Synchronlaufs der modernen Maschinen.

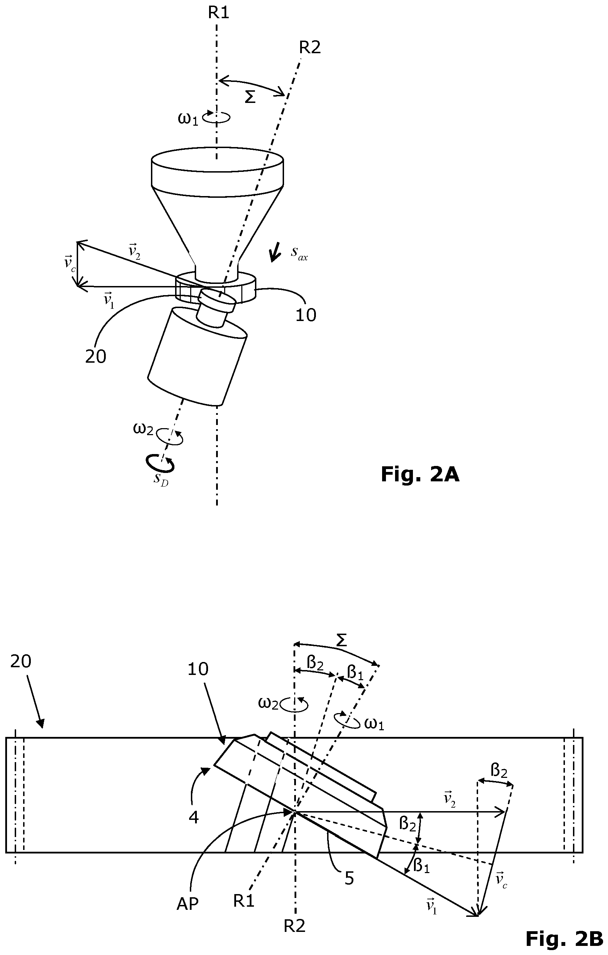

Beim Wälzschälen wird nun, wie in Fig. 2A gezeigt, ein Achskreuzwinkel $\Sigma$ zwischen der Rotationsachse R1 des Wälzschälzeugs 10 (auch als Schälrad bezeichnet) und der Rotationsachse R2 des Werkstücks 20 vorgegeben, der ungleich Null ist. Die resultierende Relativbewegung zwischen dem Wälzschälwerkzeug 10 und dem Werkstück 20 ist eine Schraubbewegung, die in einen Drehanteil (rotatorischer Anteil) und einen Schubanteil (translatorischer Anteil) zerlegt werden kann. Als antriebstechnisches Analogon kann ein Wälzschraubgetriebe betrachtet werden, wobei der Drehanteil dem Wälzen und der Schubanteil dem Gleiten der Flanken entspricht. Um so größer der Achskreuzwinkel $\Sigma$ betragsmäßig ist, um so mehr nimmt der für die Bearbeitung des Werkstücks 20 notwendige translatorische Bewegungsanteil zu. Er bewirkt nämlich eine Bewegungskomponente der Schneiden des Wälzschälwerkzeugs 10 in Richtung der Zahnflanken des Werkstücks 20. Beim Wälzschälen wird somit der Gleitanteil der kämmenden Relativbewegung der im Eingriff stehenden Zahnräder des Schraubradersatzgetriebes ausgenutzt, um die Schnittbewegung auszuführen. Beim Wälzschälen ist nur ein langsamer Axialvorschub $s_{ax}$ (auch axialer Vorschub genannt) parallel zur Rotationsachse R2 des Werkstücks 20 erforderlich und es entfällt die sogenannte Stossbewegung, die für das Wälzstossen typisch ist. Beim Wälzschälen tritt somit auch keine Rückhubbewegung auf.

Die Schnittgeschwindigkeit beim Wälzschälen wird direkt von der Drehzahl des Wälzschälwerkzeugs 10 bzw.

des Werkstücks 20 und von dem verwendeten Achskreuzwinkel $\Sigma$ der Rotationsachsen R1 und R2 beeinflusst. Der Achskreuzwinkel $\Sigma$ und damit der Gleitanteil sollte so gewählt werden, dass für die Bearbeitung des Materials bei gegebener Drehzahl eine optimale Schnittgeschwindigkeit erzielt wird.

Die Bewegungsabläufe und weitere Details eines vorbekannten Wälzschälverfahrens sind der bereits erwähnten schematischen Darstellung in Fig. 2A zu entnehmen. Fig. 2A zeigt das Wälzschälen einer Außenverzahnung an einem zylindrischen Werkstück 20. Das Werkstück 20 und das Werkzeug 10 (hier ein zylindrisches Wälzschälwerkzeug 10) rotieren in entgegengesetzter Richtung, wie in Fig. 2A z.B. anhand der Winkelgeschwindigkeiten $\omega_1$ und $\omega_2$ zu erkennen ist.

Hinzu kommen weitere Relativbewegungen. Es ist der bereits erwähnte Axialvorschub $s_{ax}$ erforderlich, um die gesamte Verzahnbreite des Werkstücks 20 mit dem Werkzeug 10 bearbeiten zu können. Der Axialvorschub bewirkt eine Verschiebung des Werkzeugs 10 gegenüber dem Werkstück 20 in paralleler Richtung zur Rotationsachse R2 des Werkstücks 20. Die Richtung dieser Bewegung des Werkzeugs 10 ist in Fig. 2A mit $s_{ax}$ gekennzeichnet. Falls am Werkstück 20 eine Schrägverzahnung erwünscht ist (d.h. $ß_2{\neq}0$), wird dem Axialvorschub $s_{ax}$ ein Differentialvorschub $s_D$ überlagert, welcher, wie in Fig. 2A gekennzeichnet, einer zusätzlichen Drehung des Werkstücks 20 um seine Rotationsachse R2 entspricht. Der Differentialvorschub $s_D$ und der Axialvorschub $s_{ax}$ werden am Auslegungspunkt derart aufeinander abgestimmt, dass der resultierende Vorschub des Werkzeugs 10 gegenüber dem Werkstück 20 in Richtung der zu erzeugenden Zahnlücke erfolgt. Zusätzlich kann ein Radialvorschub $s_{rad}$ eingesetzt werden, um etwa die Balligkeit der Verzahnung des Werkstücks 20 zu beeinflussen.

Beim Wälzschälen ergibt sich der Vektor der Schnittgeschwindigkeit $\vec{v}_c$ im Wesentlichen als Differenz der beiden um den Achskreuzwinkel $\Sigma$ zueinander geneigten Geschwindigkeitsvektoren $\vec{v}_1$ und $\vec{v}_2$ der Rotationsachsen R1, R2 von Werkzeug 10 und Werkstück 20. $\vec{v}_1$ ist der Geschwindigkeitsvektor am Umfang des Werkzeugs 10 und $\vec{v}_2$ ist der Geschwindigkeitsvektor am Umfang des Werkstücks 20. Die Schnittgeschwindigkeit $v_c$ des Wälzschälprozesses kann durch den Achskreuzwinkel $\Sigma$ und die Drehzahl im Schraubradersatzgetriebe verändert werden. Der wie bereits erwähnt relativ langsame Axialvorschub $s_{ax}$ hat beim Wälzschälverfahren nur einen kleinen Einfluss auf die Schnittgeschwindigkeit $\vec{v}_c$, der vernachlässigt werden kann. Deshalb ist der Axialvorschub $s_{ax}$ in dem Vektordiagramm mit den Vektoren $\vec{v}_1$, $\vec{v}_2$ und $\vec{v}_c$ in Fig. 2A nicht berücksichtigt.

In Fig. 2B ist das Wälzschälen einer Außenverzahnung eines Werkstücks 20 mit einem konischen Wälzschälwerkzeug 10 gezeigt. In Fig. 2B sind wiederum der Achskreuzwinkel $\Sigma$, der Vektor der Schnittgeschwindigkeit $\vec{v}_c$, die Geschwindigkeitsvektoren $\vec{v}_1$ am Umfang des Werkzeugs 10 und $\vec{v}_2$ am Umfang des Werkstücks 20, sowie der Schrägungswinkels $ß_1$, des Werkzeugs 10 und der Schrägungswinkel $ß_2$ des Werkstücks 20 gezeigt. Der Schrägungswinkel $ß_2$ hier ungleich Null. Der Zahnkopf des Werkzeugs 10 ist in Fig. 2B mit dem Bezugszeichen 4 gekennzeichnet. Die Zahnbrust ist in Fig. 2B mit dem Bezugszeichen 5 gekennzeichnet. Die beiden Rotationsachsen R1 und R2 schneiden sich nicht, sondern sind windschief zueinander angeordnet. Bei einem konischen Wälzschälwerkzeug 10 wird der Auslegungspunkt AP üblicherweise auf dem Gemeinlot der beiden Rotationsachsen R1 und R2 gewählt, da ein Ankippen des Wälzschälwerkzeugs 10 zur Beschaffung von Freiwinkeln nicht notwendig ist. Der Auslegungspunkt AP fällt hier mit dem sogenannten Berührpunkt zusammen. In diesem Auslegungspunkt AP berühren sich die Wälzkreise des Schraubwälzersatzgetriebes.

Beim Wälzschälen kommt ein Werkzeug 10 zum Einsatz, das mindestens eine geometrisch bestimmte Schneidkante umfasst. Die Schneidkante/Schneidkanten sind in Fig. 2A und Fig. 2B nicht gezeigt. Die Form und Anordnung der Schneidkanten sowie der angrenzenden Span- und Freiflächen gehören zu denjenigen Aspekten, die in der Praxis bei einer konkreten Auslegung berücksichtigt werden müssen.

Das Wälzschälwerkzeug 10 hat in dem in Fig. 2A gezeigten Beispiel die Form eines geradverzahnten Stirnrads. Die Außenkontur des Grundkörpers in Fig. 2A ist zylindrisch. Sie kann aber auch kegelig (auch konisch genannt) sein, wie in Fig. 2B gezeigt. Da der oder die Zähne des Wälzschälwerkzeugs 10 über die gesamte Schneidkantenlänge in Eingriff kommen, benötigt jeder Zahn des Werkzeugs 10 an der Schneidkante einen ausreichenden Freiwinkel.

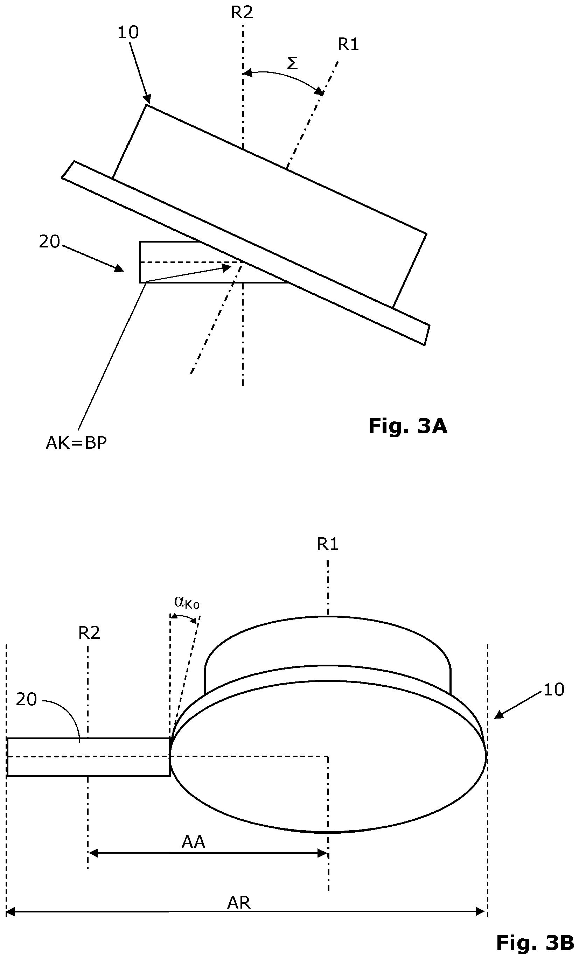

Wenn man von einem gerad- oder schrägverzahnten konischen Wälzschälwerkzeug 10 ausgeht, wie in den Figuren 3A und 3B gezeigt, dann erkennt man, dass ein solches Wälzschälwerkzeug 10 sogenannte konstruktive Freiwinkel aufgrund der konischen Grundform des Wälzschälwerkzeugs 10 aufweist. D.h. die Freiwinkel am Kopf und an den Flanken des konischen Wälzschälwerkzeugs 10 sind aufgrund der Geometrie des Wälzschälwerkzeugs 10 vorgegeben. Das Profil der Schneiden eines konischen Wälzschälwerkzeugs 10 muss jedoch bestimmte Bedingungen erfüllen, um überhaupt ein Nachschleifen zu ermöglichen. In den Figuren 3A und 3B ist ein konisches (Außen-)Wälzschälwerkzeug 10 beim Aussenverzahnen eines Werkstücks 20 gezeigt. Der sogenannte konstruktive Freiwinkel $\alpha_{Ko}$ am Schneidenkopf des konischen Wälzschälwerkzeugs 10 ist in Fig. 3B zu erkennen. Der Achskreuzpunkt AK und der Berührpunkt BP der Wälzkreise von Wälzschälwerkzeug 10 und Werkstück 20 fallen bei der Fig. 3A zusammen und liegen auf dem Gemeinlot (nicht in den Figuren 3A und 3B zu erkennen bzw. gezeigt) der Rotationsachsen R1 und R2.

Eigene Untersuchungen bisheriger Wälzschälverfahren haben gezeigt, dass es je nach Auslegung der Wälzschälwerkzeuge 10 zu einem deutlichen Verschleiß des Wälzschälwerkzeugs 10 kommen kann. Es werden daher Lösungen gesucht, die es ermöglichen den Verschleiß der Wälzschälwerkzeuge 10 zu reduzieren, respektive die Standzeit der Wälzschälwerkzeuge 10 zu verbessern. Um den Verschleiß der Wälzschälwerkzeuge 10 zu reduzieren, kann man zum Beispiel möglichst viele Schneidzähne am Werkzeug 10 vorsehen. Dadurch wird das Wälzschälverfahren wirtschaftlicher, da die Herstellkosten beim Verzahnen von Werkstücken 20 wesentlich durch die Werkzeugstandzeiten beeinflusst werden. Um möglichst viele Schneidzähne auf dem Werkzeug 10 unterbringen zu können, muss das Wälzschälwerkzeug 10 möglichst groß gestaltet werden. Der möglichen Größe der einsetzbaren Wälzschälwerkzeuge 10 sind insbesondere durch die zu verwendende Bearbeitungsmaschine Grenzen gesetzt. Genauer gesagt, besteht eine Beschränkung durch den Arbeitsraum der Maschine sowie durch die möglichen Verfahrwege der Achsen, bzw. Anordnung der Achsen.

Die Probleme, die sich durch die Beschränkung des Arbeitsraums ergeben, werden im Folgenden unter Bezugnahme auf die bereits beschriebenen Figuren 3A und 3B näher erläutert. In diesen beiden Figuren ist ein Werkstück 20 mit einer Außenverzahnung nach DIN867 mit Normalmodul 8mm, Zähnezahl 25 und Schrägungswinkel $\beta_2$ = 0 Grad gezeigt, wobei der Schrägungswinkel $\beta_2$ nicht gezeigt ist. Dieses Werkstück 20 soll mittels Wälzschälen unter einem Achskreuzwinkel $\sum$ von 25 Grad mit einem üblichen konischen (Außen-) Wälzschälwerkzeug 10 (ohne Neigung) bearbeitet werden. Der Wälzkreisdurchmesser des Werkstücks 20 beträgt hierbei 200mm. Der Arbeitsraum AR in Achsabstandsrichtung der einzusetzenden Bearbeitungsmaschine beträgt 600mm. Aufgrund dieser platzbeschränkenden Vorgaben, kann das einzusetzende konische (Außen-)Wälzschälwerkzeug 10 höchstens 44 Schneidzähne umfassen, bei einem größtmöglichen Werkzeugwälzkreisdurchmesser von ca. 388mm. Der Achsabstand AA beträgt hierbei ca. 294mm.

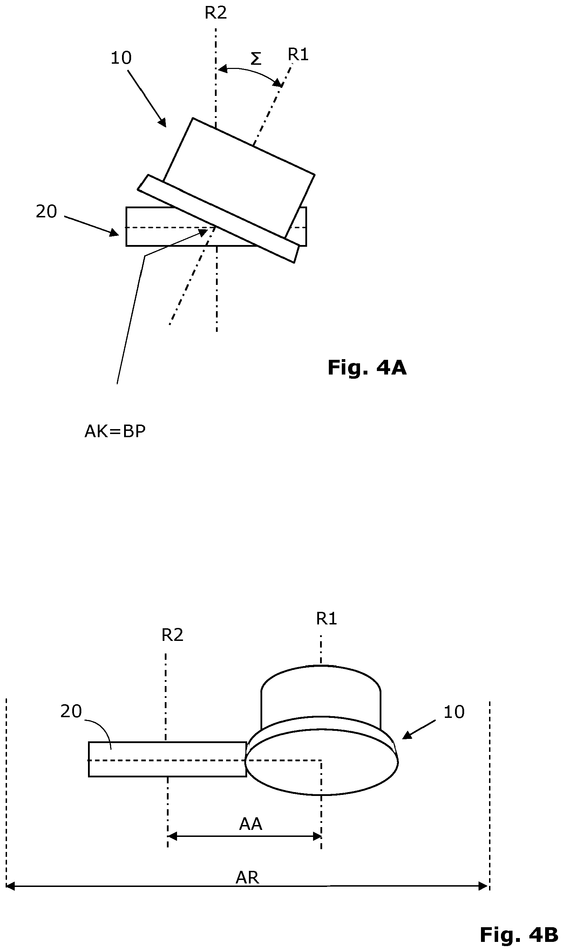

Die Probleme, die sich durch die Beschränkung des Achsabstands respektive des Verfahrwegs der Achsen einer Maschine ergeben, werden im Folgenden unter Bezugnahme auf die Figuren 4A und 4B näher erläutert. Es soll die gleiche Außenverzahnung wie in den Figuren 3A und 3B wiederum mit einem Achskreuzwinkel $\sum$ von 25 Grad mit einem üblichen konischen (Außen-) Wälzschälwerkzeug 10 (ohne Neigung) bearbeitet werden. Der Wälzkreisdurchmesser des Werkstücks 20 beträgt hierbei 200mm. Zusätzlich zur Arbeitsraumeinschränkung erlauben die Verfahrwege der einzusetzenden Bearbeitungsmaschine einen maximalen Achsabstand AA von 200mm. Dann kann das einzusetzende (Außen-)Wälzschälwerkzeug 10 mit einem größtmöglichen Werkzeugwälzkreisdurchmesser von ca. 194mm höchstens 22 Schneidzähne umfassen. Die maximale Grösse des (Außen-)Wälzschälwerkzeugs 10 ist in diesem Beispiel also nur noch halb so groß wie in dem Beispiel, das in den Figuren 3A und 3B gezeigt ist. Der Achsabstand AA beträgt hierbei ca. 197mm.

Um die Standzeit der Wälzschälwerkzeuge 10 zu verbessern, kann man, wie bereits erwähnt, die Anzahl der Schneidzähne erhöhen. Idealerweise würde man nicht nur die Anzahl der Schneidzähne erhöhen, sondern man würde das Wälzschälwerkzeug 10 mit nachschleifbaren Messerstäben ausstatten. Die Messerstäbe können dann bei Bedarf an den Schneidzähnen nachgeschliffen werden oder sie können notfalls sogar ausgetauscht werden. Auch das trägt zu einer Verbesserung der Wirtschaftlichkeit bei. Man kann hierbei jedoch eine hohe Packungsdichte der Messerstäbe nur durch eine sehr komplexe Anordnung der Messerschäfte der Messerstäbe erreichen, wie beispielsweise in der deutschen Gebrauchsmusteranmeldung DE 202011050054.3, die am 6. Mai 2011 unter dem Titel "WÄLZSCHÄLWERKZEUG MIT MESSERSTÄBEN" eingereicht wurde, beschrieben.

Alternativ kann, um eine Durchdringung der Messerschäfte zu vermeiden, die sich bei einer hohen Packungsdichte der Messerstäbe ergibt, mit einer Teilbestückung des Wälzschälwerkzeugs 10 gearbeitet werden. D.h. dass nicht alle Schneidzähne eines Vollschälrades ausgebildet werden, sondern z.B. nur jede zweite oder dritte. Dadurch wird die tatsächliche Schneidzähnezahl jedoch reduziert, was zu Ungunsten der Werkzeugstandzeit geht.

Aufgabe der vorliegenden Erfindung ist es, ein Verfahren und eine Vorrichtung zum spanenden Bearbeiten der Zahnflanken eines Zahnrades oder anderer periodischer aussenliegender Strukturen bereitzustellen, das sich durch eine Reduktion der Produktionskosten pro Zahnrad oder Werkstück auszeichnet.

Insbesondere geht es darum, unter den Restriktionen von Arbeitsraum und Verfahrwegen einer einzusetzenden Bearbeitungsmaschine eine möglichst hohe Schneidzähnezahl und damit Werkzeugstandzeit zu gewährleisten.

Insbesondere geht es darum die Werkzeugkosten möglichst niedrig zu halten, indem die Standzeit der Werkzeuge verbessert wird.

Vorzugsweise sollen die Schneidzähne der Wälzschälwerkzeuge durch nachschleifbare Messereinsätze (z.B. in Form von Stabmessern) ausgebildet werden.

Diese Aufgabe wird gemäß der vorliegenden Erfindung durch ein Verfahren gelöst, das hier als Innen-Wälzschälverfahren bezeichnet wird.

Das Innen-Wälzschälverfahren lässt sich im Zusammenhang mit der Herstellung rotationssymmetrischer, periodischer, aussenliegender Strukturen, wie Aussenverzahnungen und dergleichen, einsetzen.

Bei dem Innen-Wälzschälverfahren kommt ein Wälzschälwerkzeug zum Einsatz, das hier aufgrund seiner speziellen Bauform auch als Innenschälring bezeichnet wird.

Gemäss Erfindung geht es um ein Verfahren und eine Vorrichtung zum Wälzschälen eines Werkstücks mit aussenliegender, rotationssymmetrischer, periodischer Struktur unter Einsatz eines Wälzschälwerkzeugs. Es werden die folgenden Schritte ausgeführt:

- Drehen des Wälzschälwerkzeugs um eine erste Rotationsachse,
- gekoppeltes Drehen des Werkstücks um eine zweite Rotationsachse,
- Ausführen einer axialen Vorschubbewegung des Wälzschälwerkzeugs in Bezug zu dem Werkstück in einer Richtung parallel zur zweiten Rotationsachse,

wobei während des Wälzschälens die beiden Rotationsachsen mit einem Achskreuzwinkel windschief relativ zueinander angestellt sind. Bei dem Wälzschälwerkzeug handelt es sich um ein Innenschälring, das einen Innenraum aufspannt, eine Mehrzahl von Schneidzähnen aufweist, wobei an jedem Schneidzahn mindestens eine Schneidkante, eine Schneidkopfspitze und eine Spanfläche angebracht sind, wobei die Spanflächen aller Schneidzähne bezüglich der ersten Rotationsachse rotationssymmetrisch an einer stirnseitigen Ebene oder stirnseitigen Kegelfläche des Innenschälrings angeordnet sind, und wobei die Schneidkopfspitzen aller Schneidzähne in den Innenraum, d.h. in Richtung der ersten Rotationsachse zeigen.

Kennzeichnend für das Innen-Wälzschälen der Erfindung ist, dass die relativen Bewegungsabläufe (Relativbewegungen genannt) zwischen Werkstück und Innenschälring so vorgegeben und ausgeführt werden, dass aussen am Werkstück fortschreitend Material abgetragen wird bis die Zähne oder die anderen aussenliegenden periodischen Strukturen vollständig ausgebildet sind.

Vorzugsweise sind die Spanflächen an einer stirnseitigen Kegelfläche, welche zu einer Stirnebene entarten kann, rotationssymmetrisch bezüglich der Rotationsachse des Innenschälrings angeordnet.

Gemäss Erfindung kann der relativen Vorschubbewegung des Innenschälrings eine radiale Bewegung überlagert sein, um z.B. die Balligkeit der Zähne, gemäss der technischen Lehre der deutschen Patentanmeldung DE3915976 A1, zu beeinflussen.

Das Innen-Wälzschälen kann an einem unverzahnten Werkstück, vorzugsweise bei einer Weichbearbeitung, zum Einsatz kommen.

Das Innen-Wälzschälen kann an einem vorverzahnten Werkstück, vorzugsweise nach einer Weichbearbeitung, zum Einsatz kommen.

Während des Innen-Wälzschälens vollführt der sich drehende Innenschälring eine axiale Vorschubbewegung in Bezug auf das sich drehende Werkstück in Richtung der zweiten Rotationsachse, wobei diese axiale Vorschubbewegung gleichsinnig oder gegenläufig zur Schnittrichtung verläuft.

Die Zahnlücken können gemäss Erfindung direkt auf die volle Tiefe gebracht werden und müssen in diesem Fall nicht in einer Mehrschnittstrategie erzeugt werden.

Das Innen-Wälzschälen kann im Rahmen eines Mehrschnitt-Wälzschälverfahrens zum Einsatz kommen. Gemäss Erfindung können den axialen Bewegungen radiale Bewegungen überlagert sein, um eine Mehrschnittstrategie umzusetzen, oder um einlaufende oder auslaufende Zahnnuten gemäss der technischen Lehre der internationalen Patentanmeldung WO 2010/060733 A1 zu erzeugen.

Gemäss Erfindung wird die Standzeit der als Wälzschälwerkzeug dienenden Innenschälringe deutlich verbessert, da aufgrund der speziellen Bauform der Innenschälringe mehr Schneidzähne untergebracht werden können. Insbesondere können mehr Schneidplatten oder Messerstäbe am Innenschälring untergebracht werden als bisher unter den beschriebenen Beschränkungen von realen Bearbeitungsmaschinen bei Wälzschälwerkzeugen möglich.

Die Rotationsachse des Innenschälrings ist beim Innen-Wälzschälen windschief gegenüber der Rotationsachse des Werkstücks angestellt, d.h. der Achskreuzwinkel $\sum$ ist stets ungleich Null.

Zusätzlich kann der Innenschälring während des Wälzschälens in Richtung auf das Werkstück hingeneigt oder vom Werkstück weggeneigt sein, wie zum Beispiel in einer Parallelanmeldung des vorliegenden Anmelders beschrieben, die am 26.5.2011 unter der Anmeldenummer EP11167703.5 beim Europäischen Patentamt eingereicht wurde.

Bei dem Innen-Wälzschälen handelt es sich um ein kontinuierliches, spanabhebendes Verfahren.

Vorzugsweise kommt bei allen Ausführungsformen ein scheibenartiger Innenschälring zum Einsatz, der sich deutlich von anderen Wälzschälwerkzeugen unterscheidet.

Gemäss Erfindung weist der Innenschälring einen scheibenartigen Werkzeugbereich auf, der Schneidköpfe hat, die in Form von Schneidzähnen ausgeprägt sind, die gerade oder schräg in den Innenraum in Richtung der Rotationsachse des Innenschälrings ragen.

Die scheibenartigen Innenschälringe gemäss Erfindung können als sogenannte Vollwerkzeuge ausgelegt sein, d.h. es handelt sich um Werkzeuge, die im Wesentlichen einstückig ausgeführt sind. Bei den Vollwerkzeugen sind die Schneidzähne ein integraler Bestandteil des Werkzeugs. Besonders bevorzugt sind für alle Ausführungsformen der Erfindung Messerkopf-Innenschälringe (hier Stabmesser-Innenschälringe genannt), die einen ringförmigen (meist scheibenartigen) Messerkopfgrundkörper haben, der mit Messereinsätzen, vorzugsweise in Form von Stabmessern, so bestückt ist, dass die Schneidzähne gerade oder schräg in den Innenraum in Richtung der Rotationsachse des Innenschälrings ragen. Auch möglich sind Ausführungsformen der Erfindung, die als Schneidplatten-Werkzeuge ausgelegt sind, die einen ringförmigen (meist scheibenartigen) Messerkopfgrundkörper haben, der mit Schneidplatten bestückt ist, deren Schneidzähne gerade oder schräg in den Innenraum in Richtung der Rotationsachse des Innenschälrings ragen.

Die Erfindung bietet gegenüber dem konventionellen Wälzschälen eine Reihe von Vorteilen, die im Folgenden zusammenfassend aufgeführt sind:

- längere Standzeit der Werkzeuge;
- geringere Werkzeugstückkosten;
- reduziertes Werkzeugversagen;
- reduzierter Platzbedarf (Achsabstand und/oder Grösse des Arbeitsraums) für den Bearbeitungsbereich der Maschine;
- bessere Wirtschaftlichkeit;
- verbesserte Spanbildungsbedingungen durch längeren Eingriff eines jeden Schneidzahns aufgrund des höheren Überdeckungsverhältnisses.

Das erfindungsgemässe Verfahren kann sowohl im Zusammenhang mit einer Trocken- als auch einer Nassbearbeitung durchgeführt werden.

Das erfindungsgemässe Verfahren kann zur Weich- und/oder Hartbearbeitung eingesetzt werden.

ZEICHNUNGEN

Weitere Einzelheiten und Vorteile der Erfindung werden im Folgenden anhand von Ausführungsbeispielen und mit Bezug auf die Zeichnung beschrieben. In allen schematischen Zeichnungen sind, der Einfachheit der Darstellung halber, Werkstück und Wälzschälwerkzeug auf die Situation am Wälzkreis (bzw. am Werkstück auf den Wälzzylinder) reduziert. Die dargestellten Verhältnisse gelten aber auch für die ganze Verzahnung mit einer Zahnhöhe.

FIG. 1     zeigt eine schematische Darstellung eines Stossrads mit zylindrischer Außenkontur im Eingriff mit einem außenverzahnten Werkstück beim Wälzstossen;

FIG. 2A     zeigt eine schematische Darstellung eines geradverzahnten Schälrads mit zylindrischer Außenkontur im Eingriff mit einem außenverzahnten Werkstück beim Wälzschälen;

FIG. 2B     zeigt eine schematische Darstellung eines schrägverzahnten Schälrads mit konischer Außenkontur im Eingriff mit einem außenverzahnten Werkstück beim Wälzschälen;

FIG. 3A     zeigt eine schematische Achskreuzprojektion (Berührebenenprojektion) eines konischen (Außen-)Wälzschälwerkzeugs beim Wälzschälen eines außenverzahnten Werkstücks, wobei ein Achskreuzwinkel von 25 Grad vorgegeben ist;

FIG. 3B     zeigt eine schematische Achskreuzseitenprojektion (Berührebenenseitenprojektion) des konischen (Außen-) Wälzschälwerkzeugs und Werkstücks nach Fig. 3A;

FIG. 4A     zeigt eine schematische Achskreuzprojektion (Berührebenenprojektion) eines konischen (Außen-)Wälzschälwerkzeugs beim Wälzschälen eines außenverzahnten Werkstücks, wobei ein Achskreuzwinkel von 25 Grad vorgegeben ist;

FIG. 4B     zeigt eine schematische Achskreuzseitenprojektion (Berührebenenseitenprojektion) des konischen (Außen-) Wälzschälwerkzeugs und Werkstücks nach Fig. 4A;

FIG. 5A     zeigt eine schematische Achskreuzrückseitenprojektion (Berührebenenprojektion) eines konischen Innenschälrings der Erfindung beim Wälzschälen eines außenverzahnten Werkstücks, wobei ein Achskreuzwinkel von 25 Grad vorgegeben ist;

FIG. 5B     zeigt eine schematische Berührebenenseitenprojektion des konischen Innenschälrings und Werkstücks nach Fig. 5A;

FIG. 6     zeigt eine schematische Ansicht eines Innenschälrings in Bezug zur sogenannten Berührebene mit einem deutlichen negativen Neigungswinkel $\delta = -25$ Grad;

**FIG. 7**     zeigt eine schematische Ansicht eines Innenschälrings in Bezug zur sogenannten Berührebene mit einem deutlichen positiven Neigungswinkel δ = 25 Grad;

**FIG. 8**     zeigt eine schematische Ansicht eines zylindrischen Innenschälrings beim Wälzschälen eines Werkstücks, wobei ein effektiver Achskreuzwinkel von 30 Grad vorgegeben ist und der Innenschälring mit einem Neigungswinkel von 15 Grad vom Werkstück weggeneigt ist;

**FIG. 9**     zeigt eine schematische Ansicht eines konischen Innenschälrings beim Wälzschälen eines Werkstücks, wobei ein effektiver Achskreuzwinkel von 30 Grad vorgegeben ist und der Innenschälring mit einem Neigungswinkel von -20 Grad zum Werkstück hingeneigt ist;

**FIG. 10**    zeigt eine stark schematisierte Ansicht eines Innenschälrings und des Wälzkreises eines Werkstücks, wobei hier nur drei Messerstäbe des Innenschälrings gezeigt sind;

**FIG. 11A**   zeigt eine stark schematisierte Ansicht eines konischen Innenschälrings, der im Zusammenhang mit der Erfindung eingesetzt werden kann, wobei der Innenschälring mit Messerstäben bestückt ist, deren Spanflächen auf einer stirnseitigen Kegelfläche liegen (der Innenschälring hat in Wirklichkeit einen größeren Durchmesser als gezeigt);

**FIG. 11B**   zeigt eine stark schematisierte Ansicht des Innenschälrings nach Fig. 11A zusammen mit einem aussenverzahnten zylindrischen Werkstück, wobei ein Neigungswinkel δ von -20 Grad vorgegeben ist;

**FIG. 12A**   zeigt eine stark schematisierte Ansicht eines konischen Innenschälrings, der im Zusammenhang mit der Erfindung eingesetzt werden kann, wobei der Innenschälring mit Messerstäben bestückt ist, deren Spanflächen auf einer stirnseitigen Kegelfläche liegen (der Innenschälring hat in Wirklichkeit einen größeren Durchmesser als gezeigt);

**FIG. 12B**   zeigt eine stark schematisierte Ansicht des Innenschälrings nach Fig. 12A zusammen mit einem aussenverzahnten zylindrischen Werkstück, wobei ein Neigungswinkel δ von 20 Grad vorgegeben ist;

**FIG. 13**    zeigt eine schematisierte Perspektivansicht eines Teiles eines Innenschälrings beim Innenwälzschälen eines geradverzahnten Werkstücks von schräg unten, wobei nur einige Messerstäbe des Innenschälrings gezeigt sind und der ringförmige Grundkörper des Innenschälrings ausgeblendet wurde;

**FIG. 14**    zeigt eine schematisierte Perspektivansicht eines Teiles eines Innenschälrings (Vollwerkzeug) beim Innenwälzschälen eines geradverzahnten Werkstücks von schräg oben, wobei der Innenschälring und das Werkstück jeweils im Schnitt gezeigt sind;

**FIG. 15A**   zeigt eine perspektivische Ansicht einer erfindungsgemässen Maschine mit einem Innenschälring beim Verzahnen eines aussenverzahnten Werkstücks;

**FIG. 15B**   zeigt Details einer bevorzugten Form der Aufspannung des Innenschälrings an einer Werkzeugspindel in einer erfindungsgemässen Maschine nach Fig. 15A.

## DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Rotationssymmetrische, periodische, aussenliegende Strukturen sind zum Beispiel Zahnräder mit Außenverzahnung. Es kann sich aber zum Beispiel auch um Kupplungs- oder Getriebeelemente und dergleichen handeln. Insbesondere eignen sich die Innen-Wälzschälwerkzeuge zur Herstellung von Ritzelwellen, Schnecken, Aussenzahnradpumpen, Ringgelenknaben (Ringgelenke finden zum Beispiel im Kraftfahrzeugsektor Verwendung, um die Kraft von einem Differential auf ein Fahrzeugrad zu übertragen), Keilwellenverbindungen, Riemenscheiben und dergleichen. Die periodischen Strukturen werden hier auch als periodisch wiederkehrende Strukturen bezeichnet.

Im Folgenden ist primär von Zahnrädern, Zähnen und Zahnlücken die Rede. Die Erfindung lässt sich aber auch auf andere Bauteile mit anderen periodischen, aussenliegenden Strukturen übertragen, wie oben erwähnt. Bei diesen anderen Bauteilen geht es in diesem Fall dann nicht um Zahnlücken sondern zum Beispiel um Nuten oder Rillen.

Alle Bilder sind der Einfachheit halber auf die Situation an den Wälzkreisen bzw. Wälzflächen reduziert. In den Figuren sind daher die entsprechenden Wälzkörper gezeigt.

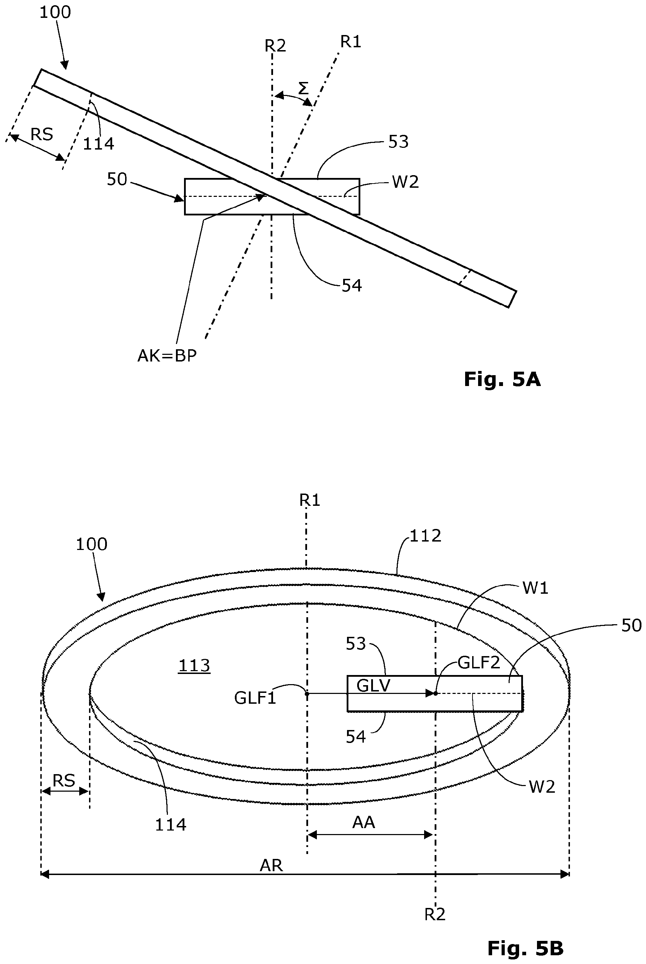

Das erfindungsgemässe Wälzschälverfahren, das hier auch als Innen-Wälzschälverfahren bezeichnet wird, ist zum Wälzschälen eines Werkstücks 50 mit rotationssymmetrischer, periodischer, aussenliegender Struktur unter Einsatz eines Innenschälrings 100 ausgelegt. Der Innenschälring 100, der hier zum Einsatz kommt, hat einen ringförmigen Grundkörper 112, der z.B. in Fig. 5B deutlich zu erkennen ist.

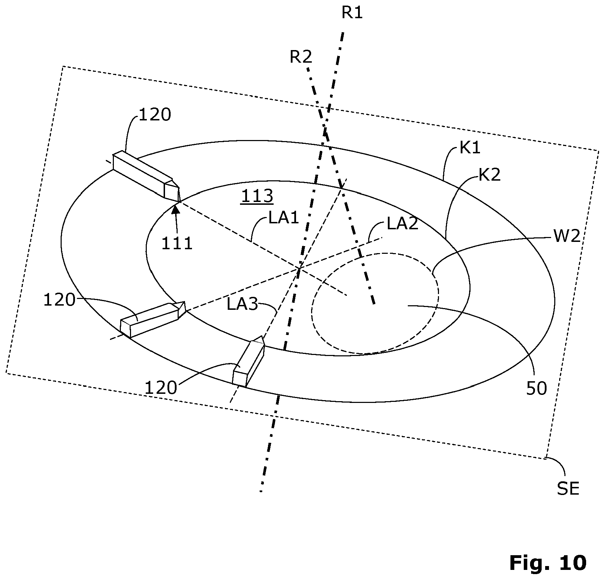

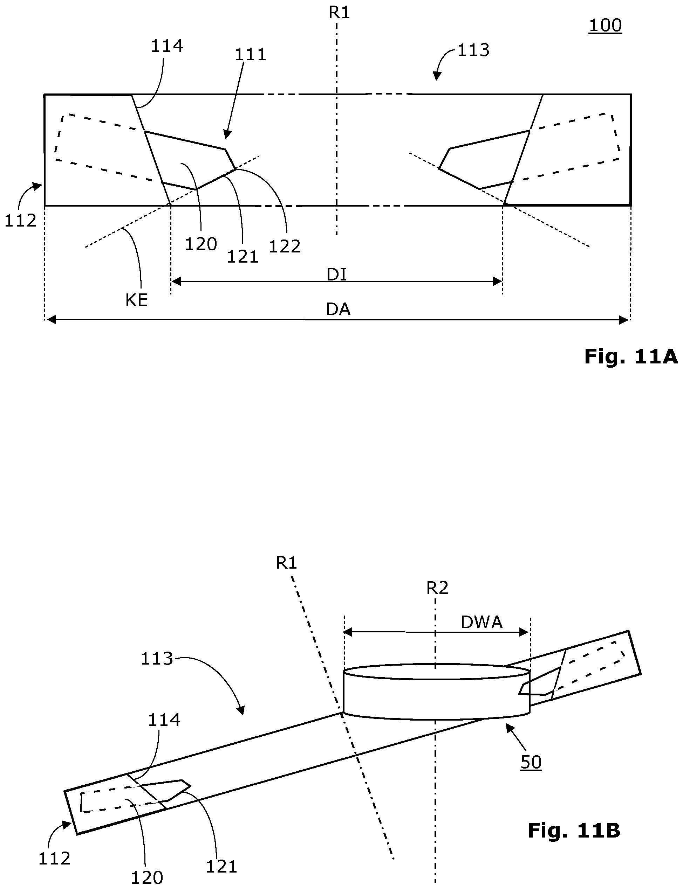

Bei dem Innenschälring 100 handelt es sich um ein Innenwerkzeug, das einen (meist kreisrunden) Innenraum 113 aufspannt. Der Innenschälring 100 weist eine Mehrzahl von Schneidköpfen 111 auf (nicht in Fig. 5A und 5B gezeigt), an denen die Schneidkanten zur spanenden Bearbeitung des Werkstücks 50 angebracht sind. Jeder Schneidkopf 111 weist eine Spanfläche (in den Figuren 11A, 11B, 12A, 12B, 13, 14 mit dem Bezugszeichen 121 gekennzeichnet) auf, die bezüglich der Rotationsachse R1 rotationssymmetrisch an einer stirnseitigen Ebene (Stirnebene SE genannt) oder an einer stirnseitigen Kegelfläche KE (gegebenenfalls einzeln gegenüber der Stirnebene SE oder Kegelfläche KE um einen Treppenwinkel verkippt) angeordnet sind. In Fig. 10 ist die Stirnebene SE durch zwei konzentrische Kreise K1 und K2 festgelegt (der Kreis K2 kann dem Wälzkreis W1 des Werkzeugs 100 entsprechen). Die beiden konzentrischen Kreise K1 und K2 können z.B. den Aussendurchmesser DA und Innendurchmesser DI des ringförmigen Grundkörpers 112 des Innenschälrings 100 repräsentieren.

Die Spanflächen 121 sind an einer stirnseitigen Kegelfläche, welche zu einer Stirnebene entarten kann, rotationssymmetrisch bezüglich der Rotationsachse R1 des Werkzeugs 100 angeordnet.

Die Spanflächen 121 können als ebene Flächen oder als leicht gekrümmte Flächen an den Schneidköpfen 111 ausgebildet sein. Die Spanflächen 121 können auch leicht gewölbt sein.

Generell (d.h. bei allen Ausführungsformen) gilt, dass beim Wälzschälen die Schnittrichtung respektive der Schnittgeschwindigkeitsvektor $\vec{v}_c$ mit der Rotationsachse R1 des Werkzeugs 100 einen Winkel ungleich 90 Grad einschließt. Der spitze der beiden eingeschlossenen Winkel ist vorzugsweise kleiner gleich 60 Grad, besonders vorzugsweise kleiner gleich 45 Grad.

Der sich während der Spanabnahme an den Schneidkanten ergebende effektive Schnittgeschwindigkeitsvektor eines Schneidkantenpunktes weicht beim Wälzschälen bedingt durch die komplexe Kinematik möglicherweise vom Schnittgeschwindigkeitsvektor $\vec{v}_c$ am Auslegungspunkt AP ab. Diese Abweichung ist jedoch nicht groß, so dass auch für diese effektiven Schnittgeschwindigkeitsvektoren die folgende Aussage getroffen werden kann (diese Aussage gilt für alle Ausführungsformen der Erfindung):

-    der effektive Schnittgeschwindigkeitsvektor schließt mit der Rotationsachse R1 des Werkzeugs 100 einen Winkel ungleich 90 Grad ein.
-    Der spitze der beiden eingeschlossenen Winkel ist vorzugsweise kleiner gleich ca. 60 Grad, besonders vorzugsweise kleiner gleich ca. 45 Grad.

In den Figuren 5A und 5B ist ein beispielhafter Innenschälring 100 in stark schematisierter Form gezeigt, der eine konische Innenmantelfläche aufweist. Die Konizität der Innenmantelfläche (Kegelfläche 114 genannt) des Innenschälrings 100 kann man in Fig. 5A gut erkennen. Die konische Form der Innenmantelfläche dient der konstruktiven Freiwinkelbeschaffung, wie man es von Fig. 3B kennt. Ein konischer Innenschälring 100 hat somit eine konische Innenmantelfläche.

Das Beispiel der Figuren 5A und 5B wurde bewusst so gewählt, dass es um das Wälzschälen der gleichen Außenverzahnung wie in den Figuren 3A, 3B und 4A, 4B geht. Wiederum soll mit einem Achskreuzwinkel Σ von 25 Grad gearbeitet werden. Der Wälzkreisdurchmesser des Werkstücks 50 beträgt hierbei wiederum 200mm. Der Arbeitsraum AR in Achsabstandsrichtung der einzusetzenden Bearbeitungsmaschine beträgt 600mm. Die Verfahrwege der einzusetzenden Bearbeitungsmaschine erlauben einen maximalen Achsabstand AA von 200mm.

In einer solchen beispielhaften Konstellation, kann ein konischer Innenschälring 100 bei einer Ringstärke RS von 50mm mit einem größtmöglichen Wälzkreisdurchmesser von ca. 494mm insgesamt 56 nach innen weisende Schneidköpfe 111, die in Form von Schneidzähnen ausgeprägt sind, umfassen. Der Achsabstand AA beträgt hierbei nur ca. 147mm.

Im Vergleich zum Beispiel der Figuren 3A, 3B ist beim Einsatz des Innenschälrings 100 mit 56 nach innen weisenden Schneidzähnen 111 eine um mehr als 27% höhere Werkzeugstandzeit zu erwarten. Im Vergleich zum Beispiel der Figuren 4A, 4B ist eine um ca. 155% höhere Werkzeugstandzeit zu erwarten.

Ein weiterer Vorteil der erfindungsgemässen Innenschälringe 100 ist die höhere Überdeckung beim Eingriff der Schneidzähne 111. Die resultierende längere Eingriffstrecke bedingt bessere Spanbildungsbedingungen.

Bei allen Ausführungsformen der Erfindung stehen die beiden Rotationsachsen R1 und R2 windschief zueinander. Der Achskreuzwinkel $\sum$ ist stets ungleich Null.

Vorzugsweise können die erfindungsgemässen Innenschälringe 100 während des Innen-Wälzschälens in Richtung auf das Werkstück 50 hingeneigt oder vom Werkstück 50 weggeneigt sein. Das entsprechende Neigen des Werkzeugs 100 ist optional. Es dient generell der Kollisionsvermeidung. Ausserdem bietet es aber die folgenden Vorteile:

- Das Wegneigen ermöglicht zylindrische Innen-Schälräder 100, welche beim Nachschleifen gleiche Schneidenprofile ermöglichen wie von zylindrischen (Aussen-) Schälrädern bekannt;

- Das Hinneigen ermöglicht nachschleifbare flach angeordnete Messerstäbe.

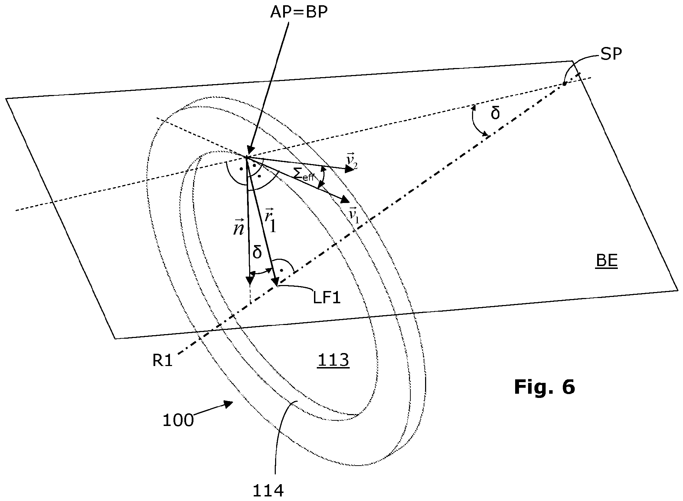

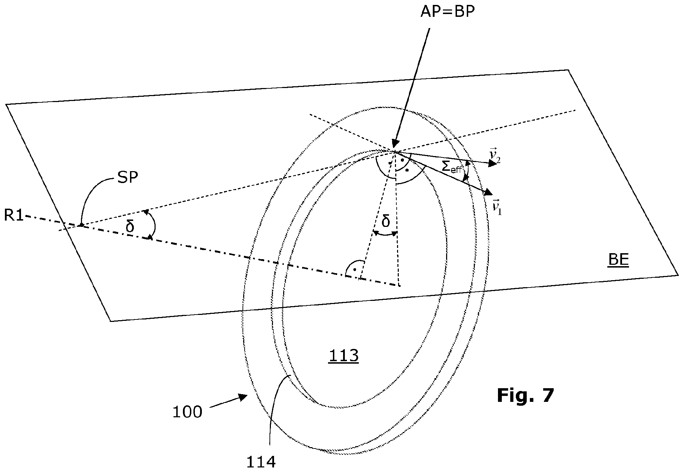

Anhand der Figuren 6 und 7 wird der Neigungswinkel $\delta$ definiert.

Fig. 6 zeigt eine schematische Ansicht eines Innenschälrings 100 in Bezug zur sogenannten Berührebene BE. Die Darstellung des Hinneigens ($\delta < 0$) gegenüber der Berührebene BE gemäss Fig. 6 ist besonders anschaulich. Die Rotationsachse R1 des Werkzeugs schneidet die Berührebene BE im Schneidenhalbraum (der Schneidenhalbraum wird später im Text definiert).

Fig. 7 zeigt eine schematische Ansicht eines Innenschälrings 100 in Bezug zur sogenannten Berührebene BE. Die Darstellung des Wegneigens ($\delta > 0$) gegenüber der Berührebene BE gemäss Fig. 7 ist besonders anschaulich. Die Rotationsachse R1 des Werkzeugs schneidet die Berührebene BE im Spanhalbraum (der Spanhalbraum wird später im Text definiert).

Falls der Neigungswinkel $\delta$ gleich Null ist, verläuft die Rotationsachse R1 des Innenschälrings 100 in einem Abstand parallel zur Berührebene BE, d.h. die Rotationsachse R1 schneidet die Berührebene BE nicht in einem Schnittpunkt SP.

Vorzugsweise liegt der Neigungswinkel $\delta$ im Bereich zwischen -30 Grad und +30 Grad.

Im Folgenden werden mehrere Beispiele für geneigte Innenschälringe 100 beim Wälzschälen beschrieben.

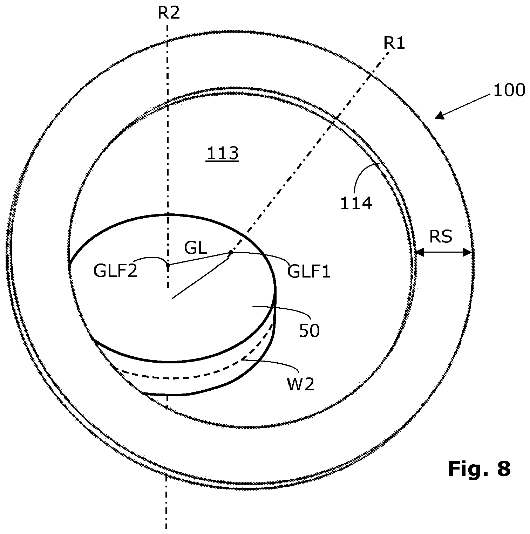

In Fig. 8 ist ein weggeneigter zylindrischer Innenschälring 100 (Zylinderring genannt) gezeigt. Der effektive Achskreuzwinkel $\sum_{\text{eff}}$ beträgt 30 Grad, der Neigungswinkel $\delta$ beträgt 15 Grad und der kinematisch erzeugte Freiwinkel beträgt am Schneidenkopf ca. 15 Grad und an den Flanken ca. 7,5 Grad. Der zylindrische Innenschälring 100 hat eine gedachte zylindrische Innenmantelfläche 114. Das Gemeinlot GL liegt in der gezeigten Ansicht oberhalb des Werkstücks 50. Genauer gesagt, liegt das Gemeinlot GL im Schneidenhalbraum des Innenschälrings 100.

Als weggeneigte Wälzschälwerkzeuge 100 eignen sich sowohl zylindrische als auch konische Innenschälringe 100, wobei es aufgrund des Wegneigens nicht zu einer Kollision des Innenschälrings 100 mit dem Werkstück 50 kommt.

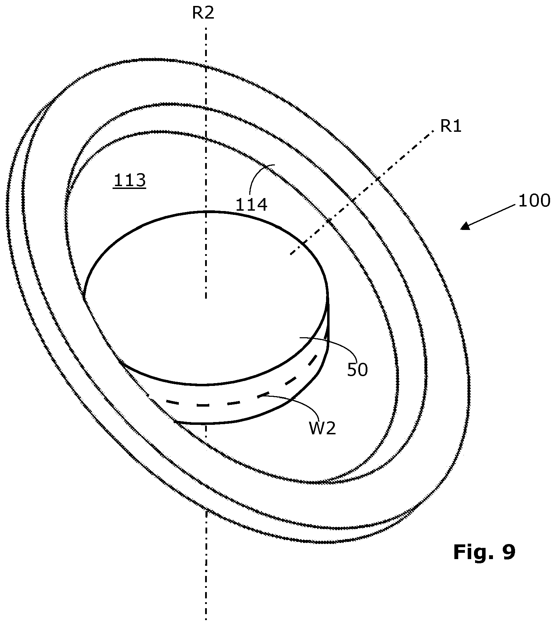

In Fig. 9 ist ein hingeneigter konischer Innenschälring 100 gezeigt. Der effektive Achskreuzwinkel $\sum_{\text{eff}}$ beträgt 30 Grad, der Neigungswinkel $\delta$ beträgt -20 Grad. Der konische Innenschälring 100 hat eine gedachte kegelige Innenmantelfläche 114. Als hingeneigte Wälzschälwerkzeuge 100 eignen sich nur konische Innenschälringe 100, weil es sonst zu Kollisionen kommen würde. Das Gemeinlot GL liegt in der gezeigten Ansicht unterhalb des Werkstücks 50 und ist daher nicht sichtbar. Genauer gesagt, liegt das Gemeinlot GL im Spanhalbraum des Innenschälrings 100.

Gemäss Erfindung weist jeder Schneidkopf 111 respektive jeder Schneidzahn eine Schneidkopfspitze 122 auf, die in den Innenraum 113 ragt und in Richtung der ersten Rotationsachse R1 zeigt. Dieser Aspekt der erfindungsgemässen Innenschälringe 100 ist z.B. in Fig. 10 zu erkennen, wo der Einfachheit halber nur drei von einer grossen Anzahl von Messerstäben 120 gezeigt sind. Im gezeigten Beispiel schneiden die Längsachsen LA1, LA2, LA3 aller Messerstäbe 120 die Rotationsachse R1 in einem gemeinsamen Punkt. Es ist jedoch auch denkbar, dass die Längsachsen LA1, LA2, LA3 aller Messerstäbe 120 windschief in Richtung der ersten Rotationsachse R1 zeigen, die Rotationsachse R1 aber nicht berühren. Ebenso müssen die Längsachsen LA1, LA2, LA3 nicht in einer Ebene liegen.

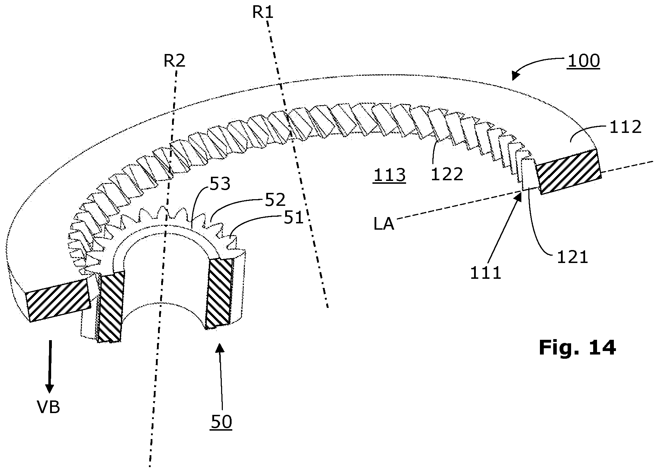

Diese Aussage gilt auch für Vollwerkzeuge (siehe z.B. Fig. 14), die mit integrierten Schneidköpfen 111 ausgeführt sind. Auch hier verlaufen die Längsachsen (in Fig. 14 ist nur eine Längsachse LA gezeigt) in Richtung der Rotationsachse R1. Sie können die Rotationsachse R1 schneiden oder an der Rotationsachse R1 vorbei laufen. Sie müssen nicht in einer Ebene liegen.

Bei allen Ausführungsformen ragt der Schneidkopf 111 mindestens ein Stück weit aus dem Material des Grundkörpers 112 heraus und in den Innenraum 113 hinein.

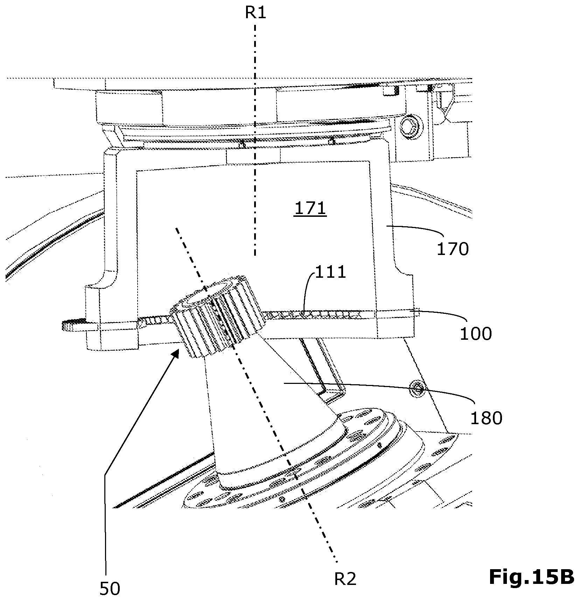

In Fig. 11A ist eine stark schematisierte Ansicht eines konischen Innenschälrings 100 gezeigt, der im Zusammenhang der Erfindung zum Wälzschälen eingesetzt werden kann. Wie in der schematischen Darstellung in Fig. 11A gezeigt, handelt es sich bei dem Wälzschälwerkzeug 100 um ein Werkzeug mit ringförmigem Grundkörper 112, der mit Messereinsätzen, vorzugsweise in Form von Stabmessern 120, bestückt ist. Der Innenschälring 100 wird mittels einer Werkzeugspindel, die hier nicht gezeigt ist, bewegungstechnisch mit einer Maschine 200 verbunden. Details einer bevorzugten Form der Aufspannung des Innenschälrings 100 an einer Werkzeugspindel 170 sind der Fig. 15B zu entnehmen. Die Spanflächen 121 der Stabmesser 120 liegen hier auf einer stirnseitigen Kegelfläche KE, deren Rotationsachse mit der Rotationsachse R1 des Innenschälrings 100 zusammen fällt. Das Werkstück 50 (hier nicht gezeigt) befindet sich während des Wälzschälens mindestens teilweise im Innenraum 113 des Innenschälrings 100. In Wirklichkeit sind der Innendurchmesser DI und Aussendurchmesser DA des Innenschälrings 100 deutlich grösser als in Fig. 11A gezeigt. Als Mindestinnendurchmesser wird der Gesamtinnendurchmesser des Innenschälrings 100 samt der Schneidzähne 111 und anderer überstehender Elemente betrachtet.

Vorzugsweise ist der Mindestinnendurchmesser des Innenschälrings 100 bei allen Ausführungsformen der Erfindung mindestens 1,5 mal so groß wie der Aussendurchmesser DWA des zu fertigenden Werkstücks 50. Besonders bevorzugt sind Innenschälringe 100, deren Mindestinnendurchmesser mindestens 2 mal so groß ist wie der Aussendurchmesser DWA des zu fertigenden Werkstücks 50. Zusätzlich zur Vorgabe eines zur kollisionsfreien Aufnahme des Werkstücks 50 geeigneten Innendurchmessers DI, sollte beim Festlegen des Achskreuzwinkels $\Sigma$ und des Neigungswinkels $\delta$ (falls dieser ungleich Null ist) darauf geachtet werden, dass es zu keiner Kollision des Werkstücks 50 mit dem Werkzeug 100 kommt. Zusätzlich zum Vorgeben des Innendurchmessers DI respektive des Mindestinnendurchmessers, des Achskreuzwinkels $\Sigma$ und des Neigungswinkels $\delta$ (falls dieser ungleich Null ist), kann die Innenmantelfläche 114 eine Konizität aufweisen (wie z.B. in Fig. 11A gezeigt), um so Kollisionen zu vermeiden. Ein Innenschälring 100 nach Fig. 11A ist speziell zum Hinneigen (d.h. $\delta$ kleiner 0 Grad) in Richtung eines Werkstücks 50 geeignet.

FIG. 11B zeigt eine stark schematisierte Ansicht des Innenschälrings 100 nach Fig. 11A zusammen mit einem zylindrischen Werkstück 50, wobei ein Neigungswinkel $\delta$ von -20 Grad vorgegeben ist. Der Innenschälring 100 hat eine Innenmantelfläche 114 als innenliegende Kollisionskontur, die so gewählt wurde, dass es trotz des deutlichen Hinneigens des zylindrischen Werkstücks 50 mit $\delta$ = - 20 Grad zu keiner Kollision des Innenschälrings 100 mit dem Werkstück 50 kommt. In Fig. 11B entspricht der Maßstab des Innenschälrings 100 und des Werkstücks 50 eher der Realität als in Fig. 11A.

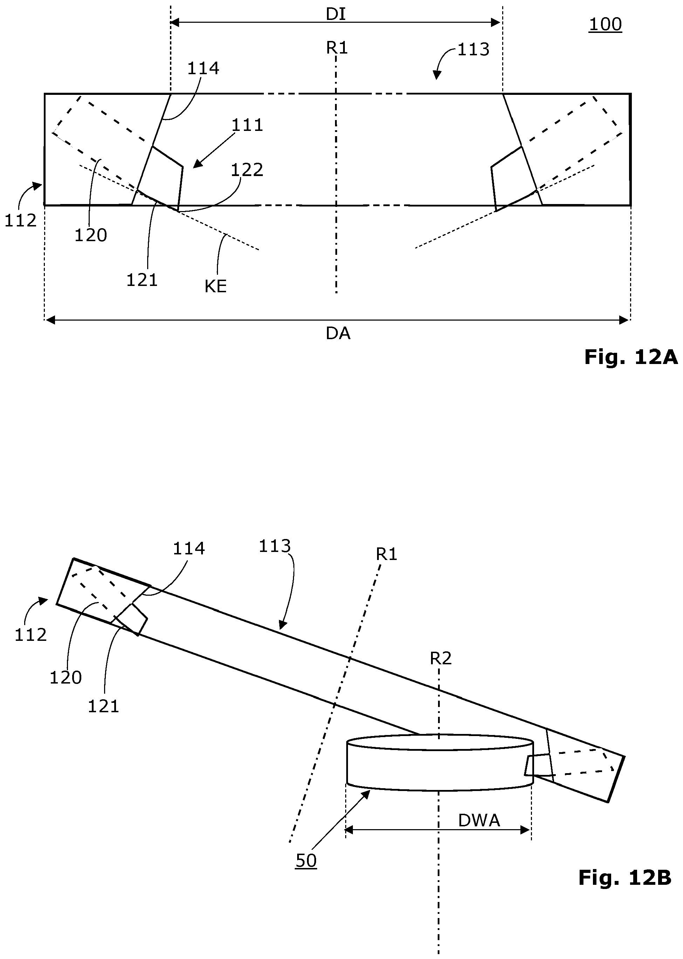

In Fig. 12A ist eine stark schematisierte Ansicht eines konischen Innenschälrings 100 gezeigt, der im Zusammenhang der Erfindung zum Wälzschälen eingesetzt werden kann. Wie in der schematischen Darstellung in Fig. 12A gezeigt, handelt es sich bei dem Wälzschälwerkzeug 100 um ein Werkzeug mit ringförmigem Grundkörper 112, der mit Messereinsätzen, vorzugsweise in Form von Stabmessern 120, bestückt ist. Der Innenschälring 100 wird mittels einer Werkzeugspindel, die hier nicht gezeigt ist, bewegungstechnisch mit einer Maschine 200 befestigt. Die Spanflächen 121 der Stabmesser 120 liegen auf einer stirnseitigen Kegelfläche KE, deren Rotationsachse mit der Rotationsachse R1 des Innenschälrings 100 zusammen fällt. Das Werkstück 50 (hier nicht gezeigt) befindet sich während des Wälzschälens mindestens teilweise im Innenraum 113 des Innenschälrings 100. In Wirklichkeit sind der Innendurchmesser DI und Aussendurchmesser DA des Innenschälrings 100 deutlich grösser als in Fig. 12A gezeigt.

Das Werkzeug 100 nach Fig. 12A hat wiederum eine Innenmantelfläche 114, die eine Konizität aufweist Ein Innenschälring 100 nach Fig. 12A ist speziell zum Wegneigen (d.h. $\delta$ grösser 0 Grad) vom Werkstück 50 geeignet.

FIG. 12B zeigt eine stark schematisierte Ansicht des Innenschälrings 100 nach Fig. 12A zusammen mit einem zylindrischen Werkstück 50, wobei ein Neigungswinkel $\delta$ von 20 Grad vorgegeben ist. Der Innenschälring 100 hat eine Innenmantelfläche 114 als innenliegende Kollisionskontur, die so gewählt wurde, dass es zu keiner Kollision des Innenschälrings 100 mit dem Werkstück 50 kommt, aber die Stabmesser optimal gehalten werden, d.h. möglichst wenig aus dem Grundkörper 112 herausragen. Es sei hier angemerkt, dass die Innenmantelfläche 114 des Werkzeugs 100 nach Fig. 11A und 11B anders herum konisch verläuft als bei dem Werkzeug 100 nach Fig. 12A und 12B.

Beim Hinneigen ist der Innenschälring 100 vorzugsweise konisch ausgeführt, um Kollisionen zu vermeiden. Beim Wegneigen muss der Innenschälring nicht konisch ausgeführt sein. Er kann in diesem Fall z.B. auch zylindrisch ausgeführt sein. In Fig. 12A und 12B ist der Innenschälring 100 an sich nicht wegen Kollisionsvermeidung konisch, sondern weil durch das Wegneigen genug Platz vorhanden ist, um die Messerstäbe 120 so besser halten/umschließen zu können.

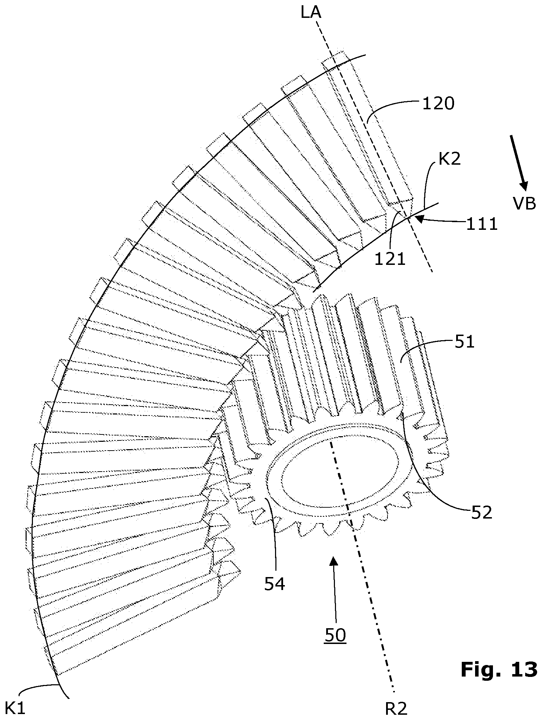

FIG. 13 zeigt eine schematisierte Perspektivansicht eines Teiles eines Innenschälrings 100 beim Innenwälzschälen eines geradverzahnten Werkstücks 50, wobei nur einige Messerstäbe 120 des Innenschälrings 100 gezeigt sind. An dem geradverzahnten Werkstück 50 sind die Zähne 51, respektive die Zahnlücken 52 zwischen den Zähnen 51 bereits fast fertig gestellt. Der ringförmige Grundkörper 112 des Innenschälrings 100 wurde ausgeblendet. Anhand von Fig. 13 ist gut zu erkennen, dass die Schäfte (hier mit rechteckigem Querschnitt gezeigt) der Messerstäbe 120 problemlos und kollisionsfrei in einem ringförmigen Grundkörper 112 angeordnet werden können. In Fig. 13 sind die beiden Kreise K1 und K2 durch Kreisbogensegmente angedeutet. Diese Kreise K1 und K2 legen die Stirnebene SE fest, wie bereits im Zusammenhang mit Fig. 10 erwähnt. In Fig. 13 sind an einem der Messerstäbe 120 der Schneidzahn 111, die Spanfläche 121 und die Längsachse LA bezeichnet. Die Spanflächen 121 der Schneidzähne 111 sind im gezeigten Beispiel leicht gegenüber der Stirnebene SE gekippt.

FIG. 14 zeigt eine schematisierte Perspektivansicht eines Teiles eines Innenschälrings 100, der hier als Vollwerkzeug ausgebildet ist, beim Innenwälzschälen eines geradverzahnten Werkstücks 50 von schräg oben. Der Innenschälring 100 und das Werkstück 50 sind hier im Schnitt gezeigt. An dem geradverzahnten Werkstück 50 sind die Zähne 51, respektive die Zahnlücken 52 zwischen den Zähnen 51 bereits fast fertig gestellt. Die Schneidzähne 111 sind hier ein integraler Bestandteil des ringförmigen Grundkörpers 112 des Innenschälrings 100. In Fig. 14 sind an einem der Schneidzähne 111 die Spanfläche 121 und die Längsachse LA bezeichnet. Die Spanflächen 121 der Schneidzähne 111 sind im gezeigten Beispiel leicht gegenüber der Stirnebene SE gekippt.

Anhand von Fig. 13 und Fig. 14 ist zu erkennen, dass beim erfindungsgemässen Innenwälzschälen stets mehr als nur ein Schneidzahn 111 in eine korrespondiere Zahnlücke 52 des Werkstücks 50 eingreifen und schneiden, wenn alle Schneidzähne 111 an der Innenmantelfläche des Innenschälrings 100 ausgebildet sind.

Das Innen-Wälzschälverfahren umfasst die folgenden Schritte:

- Drehen des Innenschälrings 100 um die erste Rotationsachse R1,
- gekoppeltes Drehen des Werkstücks 50 um die zweite Rotationsachse R2, und
- Ausführen einer axialen Vorschubbewegung VB des Innenschälrings 100 in Bezug zu dem Werkstück 50 in einer Richtung parallel zur zweiten Rotationsachse R2.

Die beiden Rotationsachsen R1, R2 sind während des Wälzschälens mit einem Achskreuzwinkel $\Sigma$ windschief relativ zueinander angestellt.

Das Innenwälzschälen zeichnet sich dadurch aus, dass der Innenschälring 100 einen Innenraum 113 aufspannt, und eine Mehrzahl von Schneidzähnen 111 aufweist. An jedem Schneidzahn 111 sind mindestens eine Schneidkante, eine Schneidkopfspitze 122 und eine Spanfläche 121 angebracht. Die Spanflächen 121 aller Schneidzähne 111 sind bezüglich der ersten Rotationsachse R1 rotationssymmetrisch auf einer Stirnebene SE oder stirnseitigen Kegelfläche KE des Innenschälrings 100 angeordnet. Die Schneidzähne 111 ragen in den Innenraum 113 und zeigen in Richtung der ersten Rotationsachse R1.

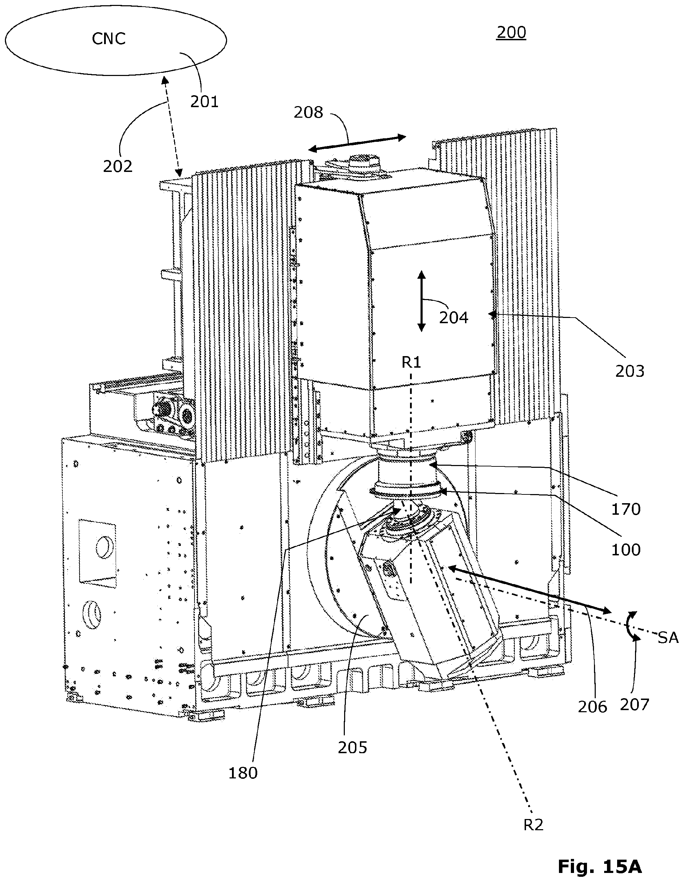

Gemäss Erfindung wird eine der Schnittrichtung entgegengesetzte Vorschubrichtung oder eine gleichgesetzte Vorschubrichtung durch einen entsprechenden Axialvorschub VB des Innenschälrings 100 relativ zu dem Werkstück 50 erzeugt. Die Richtung der Vorschubbewegung VB ist in den Figuren 13 und 14 angedeutet. Eine entsprechende Maschine 200, wie beispielhaft in Fig. 15A gezeigt, erzeugt die geeigneten Bewegungen unter Einsatz einer CNC-Steuerung 201.

Der effektive Achskreuzwinkel $\Sigma_{eff}$ liegt vorzugsweise bei allen Ausführungsformen im folgenden Bereich: -60° $\leq \Sigma_{eff} \leq 60°$, $\Sigma_{eff} \neq 0°$. Besonders bevorzugt sind effektive Achskreuzwinkel $\Sigma_{eff}$ zwischen betragsmäßig 5 und 45 Grad.

Eine CNC-gesteuerte Überlagerung der gekoppelten Drehbewegungen des Innenschälrings 100 um die erste Rotationsachse R1 und des Werkstücks 50 um die zweite Rotationsachse R2, und der Vorschubbewegungen VB des Wälzschälwerkzeugs 100 relativ zum Werkstück 50 ergibt eine spanabhebende Wälzschälbewegung der Schneidzähne 111 des Innenschälrings 100.

Am Anfang des Innen-Wälzschälens kann der Innenschälring 100 radial von aussen nach innen in das Material des Werkstücks 50 eingestochen werden, oder der Innenschälring 100 kann axial, d.h. von der Stirnseite 53 des Werkstücks 50 her kommend, eingestochen werden. In Figuren 5A und 5B ist die obere Stirnseite beispielhaft mit dem Bezugszeichen 53 und die untere Stirnseite mit dem Bezugszeichen 54 gekennzeichnet.

In den folgenden Absätzen werden weitere Erläuterungen zum erfindungsgemässen Innen-Wälzschälen gegeben.

Grundsätzlich entspricht die Relativbewegung zwischen dem Innenschälring 100 und dem Werkstück 50 auch beim Innen-Wälzschälen einem Schraubradgetriebe, auch Wälzschraubgetriebe genannt. Es handelt sich bei dem Schraubradgetriebe um ein räumliches Getriebe.

Die Grundauslegung des Innen-Wälzschälprozesses erfolgt deshalb, wie bei der Auslegung von Getrieben, an einem sogenannten Auslegungspunkt AP (siehe z.B. Fig. 2B). Unter Grundauslegung wird hier die Festlegung der räumlichen Anordnung und Bewegung des Innenschälrings 100 bzgl. des Werkstücks 50 (Kinematik) sowie die Festlegung der geometrischen Grundgrößen (hier Werkzeuggrundgeometrie genannt) des Innenschälrings 100 wie etwa Wälzkreisdurchmesser, Konizität und Schrägungswinkel verstanden.

An dem Auslegungspunkt AP werden die geometrischen und kinematischen Eingriffsverhältnisse möglichst optimal gestaltet. Die Eingriffsverhältnisse ändern sich mit zunehmender Entfernung vom Auslegungspunkt AP. Das Innen-Wälzschälen stellt in diesem Zusammenhang ein sehr komplexes Verfahren dar, bei dem sich die Eingriffverhältnisse auch bei der Bewegung der Schneiden kontinuierlich ändern. Jedoch lassen sich über die Eingriffsverhältnisse am Auslegungspunkt AP die sich ändernden Eingriffsverhältnisse gezielt beeinflussen.

Deshalb kommt der korrekten Auslegung der Eingriffsverhältnisse am Auslegungspunkt AP eine wesentliche Bedeutung bei der Auslegung von Wälzschälprozessen zu.

Begriffe zur Achsanordnung:

Es gibt mehrere Begriffe, die zur Festlegung der Achsanordnung erforderlich sind. Diese Begriffe werden in der folgenden Tabelle beschrieben.

| Gemeinlot, Gemeinlotfußpunkte, Gemeinlotvektor | Wälzschälprozesse zeichnen sich durch sich im Raum kreuzende Rotationsachsen R2 und R1 von Werkstück 50 und Wälzschälwerkzeug 100 aus. Zu den beiden sich kreuzenden Rotationsachsen R2 und R1 lässt sich eindeutig das Gemeinlot GL angeben.<br><br>Der Fußpunkt des Gemeinlots auf der Rotationsachse R2 des Werkstücks 50 sei GLF2 (siehe z.B. Fig. 8). Der Fußpunkt des Gemeinlots auf der Rotationsachse R1 des Wälzschälwerkzeugs 100 sei GLF1. Der Gemeinlotvektor GLV (siehe z.B. Fig. 5B) sei der Verbindungsvektor von GLF1 nach GLF2. |
| Achskreuzprojektion, Achskreuzpunkt | Die Betrachtung von Werkstück 50 und Wälzschälwerkzeug 100 entlang des Gemeinlots GL in Richtung des Gemeinlotvektors GLV wird als Achskreuzprojektion (siehe z.B. Fig. 5A) bezeichnet.<br><br>In der Achskreuzprojektion schneiden sich die projizierten Rotationsachsen R1 und R2 im Achskreuzpunkt AK, welcher dem in der Projektion zum Punkt reduzierten Gemeinlot GL entspricht. |
| Achskreuzwinkel | Der Achskreuzwinkel $\sum$ ist der betragsmäßig kleinere Winkel, der von den beiden Rotationsachsen R1 und R2 eingeschlossen wird. Er wird in der Achskreuzprojektion sichtbar (siehe z.B. Fig. 5A). Es gilt<br>$-90° < \sum < 90°$, $\sum \neq 0°$.<br><br>Der Achskreuzwinkel $\sum$ ist vorzeichenbehaftet. Das Vorzeichen ist für Außenverzahnungen in der Achskreuzprojektion wie folgt ohne Beschränkung der Allgemeinheit festgelegt: Der Achskreuzwinkel $\sum$ ist positiv, wenn die projizierte Rotationsachse R1 um den Achskreuzpunkt AK mathematisch positiv um $|\sum|$ bezüglich der projizierten Rotationsachse R2 verdreht ist. |
| Achsabstand | Der Achsabstand AA entspricht der Länge des Gemeinlotvektors GLV (siehe z.B. Fig. 5B). Er beschreibt den kleinsten Abstand zwischen den Rotationsachsen R1 und R2. |

**Begriffe zum Kontakt zwischen Wälzschälwerkzeug und Werkstück:**

Es gibt mehrere Begriffe, die zur Beschreibung des Kontakts zwischen Innenschälring 100 und Werkstück 50 erforderlich sind. Diese Begriffe werden in der folgenden Tabelle beschrieben.

| Wälzkreise | Die Wälzkreise von Werkstück 50 und Wälzschälwerkzeug 100 berühren sich im Auslegungspunkt AP, der deshalb auch Berührpunkt BP genannt wird.<br>Der Wälzkreis W2 (siehe z.B. Fig. 5B) des Werkstücks 50 (auch Werkstückwälzkreis genannt) liegt in einer Ebene, die senkrecht zur Rotationsachse R2 des Werkstücks 50 liegt. Der Mittelpunkt des Wälzkreises W2 liegt auf der Rotationsachse R2 des Werkstücks 50. Der Durchmesser des Werkstückwälzkreises W2 lautet $d_{w2}$.<br>Der Wälzkreis W1 (siehe z.B. Fig. 5B) des Wälzschälwerkzeugs 100 (auch Werkzeugwälzkreis genannt) liegt in einer Ebene, die senkrecht zur Rotationsachse R1 des Wälzschälwerkzeugs 100 liegt. Der Mittelpunkt des Wälzkreises W1 liegt auf der Rotationsachse R1 des Wälzschälwerkzeugs 100. Der Durchmesser des Werkzeugwälzkreises W1 lautet $d_{w1}$. Für einen Innenschälring ist $d_{w1}$ negativ. |
| Bezugsebenen | Die Werkstückbezugsebene ist diejenige Ebene, in der der Werkstückwälzkreis W2 liegt.<br>Die Werkzeugbezugsebene ist diejenige Ebene, in der der Werkzeugwälzkreis W1 liegt. |

(fortgesetzt)

| | |
|---|---|
| Spanhalbraum, Schneidenhalbraum | Die Werkzeugbezugsebene teilt den 3-dimensionalen Raum in zwei Hälften. Der Spanhalbraum sei diejenige Hälfte, in die die aus dem Schneidenmaterial des Wälzschälwerkzeugs 100, der Messerstäbe 120 oder Schneidplatten herauszeigenden Spanflächennormalen hineinzeigen. Die andere Hälfte sei mit Schneidenhalbraum bezeichnet. Die Schneidzähne 111 des Wälzschälwerkzeugs 100 erstrecken sich also im Wesentlichen im Schneidenhalbraum, können aber auch in den Spanhalbraum hineinreichen, wobei die Spanflächen 121 dem Spanhalbraum zugewandt sind. |
| Geschwindigkeitsvektoren | Im Auslegungspunkt AP kann der aus der Werkstückdrehung um R2 resultierende Geschwindigkeitsvektor $\vec{v}_2$ des zugehörigen Werkstückpunktes angegeben werden. Er liegt in der Werkstückbezugsebene, tangential zum Werkstückwälzkreis W2. Der Betrag ist $v_2 = \lvert \pi \cdot d_{w2} \cdot n_2 \rvert$ mit der vorzeichenbehafteten Werkstückdrehzahl $n_2$. Im Auslegungspunkt AP kann ebenso der aus der Werkzeugdrehung um R1 resultierende Geschwindigkeitsvektor $\vec{v}_1$ des zugehörigen Werkzeugpunktes angegeben werden. Er liegt in der Werkzeugbezugsebene, tangential zum Werkzeugwälzkreis W1. Der Betrag ist $v_1 = \lvert \pi \cdot d_{w1} \cdot n_1 \rvert$ mit der vorzeichenbehafteten Werkzeugdrehzahl $n_1$. |
| Berührradiusvektoren | Vom Auslegungspunkt AP kann das Lot auf die Rotationsachse R2 des Werkstücks 50 gefällt werden. Der zugehörige Lotfußpunkt LF2 entspricht dem Schnittpunkt zwischen Werkstückbezugsebene und Werkstückrotationsachse R2. Der Berührradiusvektor $\vec{r}_2$ des Werkstücks 50 ist der Vektor vom Auslegungspunkt AP zum Lotfußpunkt LF2. Seine Länge ist $\lvert d_{w2} \rvert / 2$. Vom Auslegungspunkt AP kann das Lot auf die Rotationsachse R1 des Wälzschälwerkzeugs 100 gefällt werden. Der zugehörige Lotfußpunkt LF1 (siehe z.B. Fig. 6) entspricht dem Schnittpunkt zwischen Werkzeugbezugsebene und Werkzeugrotationsachse R1 Der Vektor vom Auslegungspunkt AP zum Lotfußpunkt LF1 zum heißt Berührradiusvektor $\vec{r}_1$ des Innenschälrings 100. Seine Länge ist $d_{w1}/2$. |
| Berührebene BE | Die beiden Geschwindigkeitsvektoren $\vec{v}_2$ und $\vec{v}_1$ spannen die sogenannte Berührebene BE auf (siehe z.B. Fig. 6 und 7). In dieser Berührebene BE berühren sich die Wälzkreise W2 und W1 von Werkstück 50 und Wälzschälwerkzeug 100, und zwar im Auslegungspunkt AP. Darüber hinaus berühren sich in dieser Berührebene BE auslegungsgemäß auch die theoretische Wälzfläche der Verzahnung von Werkstück 50 und der Wälzkreis W1 von Wälzschälwerkzeug 100. Genauer gesagt, ist die Berührebene BE tangential zur erwähnten Wälzfläche der Verzahnung von Werkstück 50, und zwar im Auslegungspunkt AP. |
| Wälzfläche, Bezugswälzfläche | Die Wälzfläche einer Verzahnung wird auch Bezugswälzfläche genannt. Sie geht durch den Auslegungspunkt AP, ist rotationssymmetrisch bezüglich der Rotationsachse R2 des Werkstücks 50 und spiegelt einen Teil der Grundgeometrie der Verzahnung wieder. Der Wälzkreis W2 ist Teil der Wälzfläche der Verzahnung von Werkstück 50. Für die hier detailliert beschriebenen und in den Figuren gezeigten zylindrischen Verzahnungen ist die Wälzfläche ein Zylinder, für kegelige Verzahnungen ein Kegel, für plane Verzahnungen eine Ebene und für allgemeine räumliche Verzahnungen, wie z.B. bei Hypoidrädern, ein Hyperboloid. Die Ausführungen, die im Folgenden im Zusammenhang mit zylindrischen Verzahnungen gemacht werden, lassen sich entsprechend auf andere Verzahnungen übertragen. |

(fortgesetzt)

| | |
|---|---|
| Berührebenennormale | Die Berührebenennormale $\vec{n}$ (siehe z.B. Fig. 6) sei derjenige im Auslegungspunkt AP verankerte Normalenvektor der Berührebene BE, der in die Verzahnung des Werkstücks 50 hineinzeigt, d. h. vom Kopfbereich zum Fussbereich der Verzahnung zeigt. Bei der hier betrachteten Außenverzahnungen am Werkstück 50 zeigt die Berührebenennormale $\vec{n}$ somit zur Rotationsachse R2 des Werkstücks 50. Für zylindrische Verzahnungen zeigt die Berührebenennormale $\vec{n}$ in dieselbe Richtung wie der Berührradiusvektor $\vec{r}_2$ des Werkstücks 50, d.h. $\vec{n}$ und $\vec{r}_2$ unterscheiden sich nur durch ihre Länge. |
| Berührebenenprojektion | Die Betrachtung von Werkstück 50 und Wälzschälwerkzeug 100 in Richtung des Berührradiusvektors $\vec{r}_2$ des Werkstücks 50 wird als Berührebenenprojektion bezeichnet.<br><br>In der Berührebenenprojektion (siehe z.B. Fig. 5A) schneiden sich die projizierten Rotationsachsen R1 und R2 im Auslegungspunkt AP bzw. Berührpunkt BP. |
| Effektiver Achskreuzwinkel | Der effektive Achskreuzwinkel $\sum_{eff}$ ist der von den beiden Geschwindigkeitsvektoren $\vec{v}_2$ und $\vec{v}_1$ eingeschlossene Winkel gemäß $\cos(\Sigma_{eff}) = \dfrac{\vec{v}_2 \cdot \vec{v}_1}{|\vec{v}_2||\vec{v}_1|}$. Gemäss Erfindung gilt - 90° < $\sum_{eff}$ < 90°, $\sum_{eff} \neq 0°$.<br><br>Der effektive Achskreuzwinkel $\sum_{eff}$ ist wie der Achskreuzwinkel $\sum$ vorzeichenbehaftet. Das Vorzeichen ist für die hier betrachtete Paarung von Außenverzahnung am Werkstück 50 mit Innenschälring 100 wie folgt ohne Beschränkung der Allgemeinheit festgelegt: Der effektive Achskreuzwinkel $\sum_{eff}$ ist positiv, wenn die Geschwindigkeitsvektoren $\vec{v}_1$ und $\vec{v}_2$ und die Berührebenennormale $\vec{n}$ in dieser Reihenfolge ein Linkssystem bilden.<br><br>Für nicht-plane Verzahnungen am Werkstück 50 entspricht der effektive Achskreuzwinkel $\sum_{eff}$ der senkrechten Projektion des Achskreuzwinkels $\sum$ auf die Berührebene BE, also dem Achskreuzwinkel $\sum$ in der Berührebenenprojektion. |
| Neigungswinkel | Der Neigungswinkel $\delta$ beschreibt die Neigung der Werkzeugbezugsebene und damit des Wälzschälwerkzeugs 100 bzgl. der Berührebene BE (siehe Fig. 6 und 7). Er ist der vom Berührradiusvektor $\vec{r}_1$ des Wälzschälwerkzeugs 100 und der Berührebenennormale $\vec{n}$ eingeschlossene Winkel gemäß $\cos(\delta) = \dfrac{\vec{n} \cdot \vec{r}_1}{|\vec{n}||\vec{r}_1|}$ mit -90° $\leq \delta \leq$ 90° (siehe Fig. 6 und 7).<br><br>Der Neigungswinkel $\delta$ ist identisch zum (betragsmäßig kleineren) Schnittwinkel zwischen der Rotationsachse R1 des Wälzschälwerkzeugs 100 und der Berührebene BE. Der Neigungswinkel $\delta$ ist 0°, wenn die Werkzeugbezugsebene senkrecht zur Berührebene BE steht und die Werkzeugrotationsachse R1 somit parallel zur Berührebene BE verläuft. |
| | Der Neigungswinkel $\delta$ ist vorzeichenbehaftet. Der Neigungswinkel $\delta$ ist für einen Innenschälring 100 negativ wenn die Rotationsachse R1 des Wälzschälwerkzeugs 100 die Berührebene BE im Spanhalbraum schneidet. Der Neigungswinkel $\delta$ ist positiv wenn die Rotationsachse R1 des Wälzschälwerkzeugs 100 die Berührebene BE im Schneidenhalbraum schneidet. |

**Weitere Projektionen:**

Es gibt verschiedene weitere Projektionen, die zur Veranschaulichung der Erfindung eingesetzt werden. Die entsprechenden Projektionen sind in der folgenden Tabelle erläutert.

| Achskreuzseitenprojektion | Der Achskreuzseitenprojektionsvektor sei derjenige zum Gemeinlot GL und zur Rotationsachse R2 des Werkstücks 50 senkrechte Vektor, der mit dem Geschwindigkeitsvektor $\vec{v}_2$ des berührenden Werkstückpunktes einen spitzen Winkel einschließt. Dann wird die Betrachtung von Werkstück 50 und Wälzschälwerkzeug 100 in Richtung dieses Achskreuzseitenprojektionsvektors als Achskreuzseitenprojektion bezeichnet. In der Achskreuzseitenprojektion (siehe z.B. Fig. 5B) verlaufen die projizierten Rotationsachsen R1 und R2 parallel zueinander. |
|---|---|
| Achskreuzrückseitenprojektion | Die Betrachtung von Werkstück 50 und Wälzschälwerkzeug 100 entlang des Gemeinlots GL in entgegengesetzter Richtung des Gemeinlotvektors GLV wird als Achskreuzrückseitenprojektion bezeichnet. |
| Berührebenenseitenprojektion | Die Betrachtung von Werkstück 50 und Wälzschälwerkzeug 100 in Richtung des Geschwindigkeitsvektors $\vec{v}_2$ des berührenden Werkstückspunktes wird als Berührebenenseitenprojektion bezeichnet. |
| Berührebenenrückseitenprojektion | Die Betrachtung von Werkstück 50 und Wälzschälwerkzeug 100 in entgegengesetzter Richtung des Berührradiusvektors $\vec{r}_2$ des Werkstücks 50 wird als Berührebenenrückseitenprojektion bezeichnet. |

Die folgende Gleichung [1] stellt für nicht-plane Aussenverzahnungen den Zusammenhang zwischen den die räumliche Anordnung der Rotationsachsen R1 und R2 beschreibenden Winkeln her und ist damit für die Umrechnung der einzelnen Größen wichtig:

$$\cos(\Sigma) = \cos(\Sigma_{eff}) \cdot \cos(\delta) \qquad [1]$$

Der Achskreuzwinkel $\Sigma$ wird in den effektiven Achskreuzwinkel $\Sigma_{eff}$ und den Neigungswinkel $\delta$ zerlegt, wobei der effektive Achskreuzwinkel $\Sigma_{eff}$ die bestimmende Größe für die Erzeugung der relativen Schnittbewegung mit dem Schnittgeschwindigkeitsvektor $\vec{v}_c$ zwischen dem sich drehenden Wälzschälwerkzeug 100 und dem sich drehenden Werkstück 50 ist. Für plane Verzahnungen sind der effektive Achskreuzwinkel $\Sigma_{eff}$ und der Neigungswinkel $\delta$ wohl definiert, jedoch gilt nicht der Zusammenhang [1].

Gemäss Erfindung kann ein Neigungswinkel $\delta$ vorgegeben werden, dessen Betrag ungleich Null Grad ist, d.h. die Neigung der Werkzeugbezugsebene und damit des Wälzschälwerkzeugs 100 bezüglich der Berührebene BE (die durch die beiden Geschwindigkeitsvektoren $\vec{v}_2$ und $\vec{v}_1$ aufgespannt wird) ist negativ oder positiv.

Gemäss Erfindung weist der Innenschälring 100 bei allen Ausführungsformen Schneidkanten und -flächen auf, die an Schneidzähnen 111 ausgeprägt sind, wobei die Schneidzähne 111 gerade oder schräg nach innen ragen, wie z.B. in den Figuren 10, 11A, 11B, 12A, 12B, 13 und 14 zu erkennen. Die Spanflächen 121 der Schneidzähne 111 sind im Wesentlichen an der Stirnebene SE des Innenschälrings 100 oder an einer stirnseitigen Kegelfläche KE ausgeprägt. Die Spanflächen 121 können jeweils auch gegenüber der Stirnebene SE oder der Kegelfläche KE angewinkelt (geneigt) sein, um die Spanflächen vorzugsweise normal zur Schnittrichtung auszurichten.

Das Innen-Wälzschälverfahren kann an einem unverzahnten Werkstück 50, vorzugsweise im Rahmen einer Weichbearbeitung, zum Einsatz kommen.

Das Innen-Wälzschälverfahren kann auch an einem vorverzahnten Werkstück 50, vorzugsweise nach einer Weichbearbeitung, zum Einsatz gebracht werden. D.h. das Innen-Wälzschälverfahren kann auch zur Hart- oder Fertigbearbeitung eingesetzt werden. Das entsprechende Innen-Wälzschälverfahren wird hier auch als Innen-Hart-Wälzschälen bezeichnet.

Das Innen-Wälzschälverfahren kann aber auch im Rahmen eines Mehrschnitt-Wälzschälverfahrens zum Einsatz kommen.

Es sind im Rahmen eines solchen Mehrschnitt-Wälzschälverfahrens mehrere Ansätze möglich. Entweder können die periodischen Strukturen am Werkstück 50 in zwei oder mehr als zwei Schnittphasen erzeugt werden. Während einer ersten Schnittphase kann beim Innen-Wälzschälen z.B. eine Lücke oder Nut auf eine Tiefe von 50% geschnitten werden. Dann wird der Innenschälring 100 radial weiter nach innen in Richtung der Rotationsachse R2 des Werkstücks 50 bis zur vollen Tiefe zugestellt und in der zweiten Schnittphase kann die Lücke oder Nut dann auf die volle Tiefe geschnitten werden.

Der Wälzkreisdurchmesser $d_{w1}$ des Innenschälrings 100 ist bei allen Ausführungsformen der Erfindung deutlich grösser als der Wälzkreisdurchmesser $d_{w2}$ des Werkstücks 50. Vorzugsweise beträgt der Wälzkreisdurchmesser $d_{w2}$ des Werkzeugs 50 weniger als 60% des Wälzkreisdurchmessers $d_{w1}$ des Innen-Wälzschälwerkzeugs 100.

Vorzugsweise weisen die Längsachsen LA1, LA2, LA3 aller Messerstäbe 120 bei allen als Messerkopf-Werkzeuge ausgebildeten Innenschälringe 100 der Erfindung radial nach innen in Richtung der Rotationsachse R1, wie in Fig. 10 anhand von drei Messerstäben 120 gezeigt. Diese Aussage gilt auch analog für Vollwerkzeuge, wie in Fig. 14 gezeigt.

Eine Maschine 200, die zum erfindungsgemässen Innen-Wälzschälen ausgelegt ist, weist eine CNC-Steuerung 201 auf, die eine Koppelung der Achsen R1 und R2, respektive eine Koordination der Achsbewegungen ermöglicht. Die CNC-Steuerung 201 kann Teil der Maschine 200 sein, oder sie kann extern ausgeführt und zur kommunikationstechnischen Verbindung 202 mit der Maschine 200 ausgelegt sein. Die entsprechende Maschine 200 umfasst einen sogenannten "elektronischen Getriebezug", respektive eine "elektronische oder steuerungstechnische Achskopplung" um eine Vorschubbewegung VB des Innenschälrings 100 in Bezug zu dem aussenverzahnten, wälzgeschälten Werkstück 50 auszuführen (das Werkstück 50 ist in Fig. 15A nicht zu erkennen, da es im Innenraum 171 sitzt). Das gekoppelte Bewegen des Innenschälrings 100 und des Werkstücks 50 wird so ausgeführt, dass sich während der Bearbeitungsphase eine Relativbewegung zwischen dem Innenschälring 100 und dem Werkstück 50 ergibt, die der Relativbewegung eines Schraubradgetriebes entspricht. Der elektronische Getriebezug, respektive die elektronische oder steuerungstechnische Achskopplung sorgen für eine Drehzahlsynchronisierung von mindestens zwei Achsen der Maschine 200. Hierbei sind mindestens die Rotationsachse R1 der Werkzeugspindel 170 mit der Rotationsachse R2 der Werkstückspindel 180 gekoppelt. Ausserdem ist vorzugsweise bei allen Ausführungsformen die Rotationsachse R1 der Werkzeugspindel 170 mit der Axialvorschubbewegung VB in Richtung R2 gekoppelt. Diese Axialvorschubbewegung VB ergibt sich aus einer Überlagerung von Bewegungen 204 (vertikal) und 208 (horizontal). Zusätzlich kann die Werkstückspindel 180 mittels eines (Dreh-)Schlittens 205 parallel zu einer Schwenkachse SA linear verschoben werden, wie durch einen Doppelpfeil 206 dargestellt. Ausserdem kann der (Dreh-)Schlitten 205 samt Werkstückspindel 180 und Werkstück 50 um die Schwenkachse SA gedreht werden, wie durch einen Doppelpfeil 207 dargestellt. Durch das Drehen um die Schwenkachse SA kann der Achskreuzwinkel $\sum$ eingestellt werden. Der Achsabstand AA wird durch die lineare Verschiebungsbewegung 206 eingestellt werden.

Vorzugsweise kommt eine Maschine 200 zum Einsatz, die auf einer Vertikalanordnung basiert, wie in Fig. 15A und Fig. 15B gezeigt. Bei einer solchen Vertikalanordnung sitzt entweder der Innenschälring 100 samt Werkzeugspindel 170 oberhalb des Werkstücks 50 samt Werkstückspindel 180, oder umgekehrt. Die Späne, die beim Wälzschälen entstehen, fallen aufgrund der Schwerkraftwirkung nach unten und können z.B. über ein Spanbett, das nicht gezeigt ist, entfernt werden. Daher ist die in den Figuren 15A und 15B gezeigte Anordnung besonders bevorzugt, da bei dieser Anordnung keine Späne in den Innenraum 171 fallen, der vom Werkzeug 100 samt Werkzeugspindel 170 gebildet wird.

Weiterhin sorgt eine Maschine 200, die zum erfindungsgemässen Innen-Wälzschälen ausgelegt ist, für die richtigen komplexen geometrischen und kinematischen Maschineneinstellungen und Achsbewegungen der genannten Achsen. Vorzugsweise hat die Maschine bei allen Ausführungsformen sechs Achsen. Folgende Achsbewegungen sind bevorzugt:

- Drehen des Wälzschälwerkzeugs um die erste Rotationsachse R1;
- Gekoppeltes Drehen des Werkstücks 50 um die zweite Rotationsachse R2;
- Drehbewegung um die Schwenkachse SA;
- Lineare Vertikalbewegung parallel zu 204;
- Lineare Horizontalbewegung parallel zu 206;
- Lineare Horizontalbewegung parallel zu 208.

In Fig. 15B ist zu erkennen, dass vorzugsweise die Werkzeugspindel 170 und/oder ein entsprechender Adapter als rotationsförmiger Hohlkörper (z.B. als Hohlzylinder) ausgelegt ist. Die Werkzeugspindel 170 und/oder der entsprechende Adapter hat vorzugsweise eine Topfform. An der Werkzeugspindel 170 und/oder dem entsprechenden Adapter ist der Innenschälring 100 befestigt. In Fig. 15B ist eine Ausführungsform gezeigt, bei der der Innenschälring 100 ein fester Bestandteil der Werkzeugspindel 170 und/oder des entsprechenden Adapters ist. Die entsprechenden Aufnahmeöffnungen für die Messerstäbe 120 können direkt an der Werkzeugspindel 170 und/oder an dem entsprechenden Adapter vorgesehen sein. In Fig. 15B ist zu erkennen, dass die Schäfte der Messerstäbe 120 radial nach aussen aus dem Material der Werkzeugspindel 170 und/oder des entsprechenden Adapters ragen.

Eine topfförmige Werkzeugspindel 170 und/oder ein topfförmiger Adapter können auch als Vollwerkzeug ausgebildet sein oder mit Schneidplatten bestückt sein.

Eine topfförmige Werkzeugspindel 170 und/oder ein topfförmiger Adapter können aber auch zum Befestigen eines separaten, ringförmigen Innenschälrads 100 ausgelegt sein.

Aufgrund der speziellen Konstellation beim Innen-Wälzschälen, reichen Maschinen 200 mit einen Arbeitsraum AR mit einer Maximalabmessung in Achsabstandsrichtung der ersten Rotationsachse R1 von der zweiten Rotationsachse R2, der so groß ist wie der maximale Aussendurchmesser des Innenschälrings 100 (d.h. es geht um den Durchmesser DA des Grundkörpers 112 zusammen mit den überstehenden Schneidzähnen 111 bzw. Messerstäben 120).

Das Innen-Wälzschälverfahren kann bei allen Ausführungsformen trocken oder nass angewendet werden, wobei die Verwendung des Innen-Wälzschälens im Trockenen bevorzugt ist.

Das Einsatzspektrum des Innen-Wälzschälverfahrens ist groß und erstreckt sich auf die Anwendung bei der Herstellung verschiedenster rotationssymmetrischer periodischer Strukturen.

<div align="center">Bezugszeichenliste:</div>

| | |
|---|---|
| Stossrad | 1 |
| Werkstück | 2 |
| Zahnkopf | 4 |
| Zahnbrust | 5 |
| Schneidzahn/-kopf | 6 |
| Wälzschälwerkzeug | 10 |
| | |
| (wälzgeschältes) Werkstück | 20 |
| | |
| (wälzgeschältes) Werkstück | 50 |
| Zahn | 51 |
| Zahnlücke | 52 |
| Obere Stirnseite | 53 |
| untere Stirnseite | 54 |
| | |
| Wälzschälwerkzeug / Innenschälring | 100 |
| | |
| Schneidzähne / Schneidköpfe | 111 |
| Ringförmiger Grundkörper | 112 |
| kreisrunder Innenraum | 113 |
| Innenmantelfläche | 114 |
| | |
| Messerstäbe | 120 |
| Spanfläche | 121 |
| Schneidkopfspitze | 122 |
| Werkzeugspindel | 170 |
| Innenraum | 171 |
| | |
| Werkstückspindel | 180 |
| | |
| Maschine | 200 |
| CNC-Steuerung | 201 |
| kommunikationstechnische Verbindung | 202 |
| Linearvorschub | 203 |
| Vertikaler Bewegungsanteil | 204 |
| (Dreh-) Schlitten | 205 |
| Linearverschiebung (Horizontalbewegung) | 206 |
| Drehbewegung | 207 |
| lineare Horizontalbewegung | 208 |
| | |
| konstruktiver Freiwinkel | $\alpha_{Ko}$ |
| Achsabstand | AA |
| Achskreuzpunkt | AK |

(fortgesetzt)

| | |
|---|---|
| Auslegungspunkt | AP |
| Arbeitsraum | AR |
| Berührpunkt | BP |
| Schrägungswinkel des Werkzeugs | $\beta_1$ |
| Schrägungswinkel des Werkstücks | $\beta_2$ |
| Neigungswinkel | $\delta$ |
| Durchmesser des Werkzeugwälzkreises | $d_{w1}$ |
| Durchmesser des Werkstückwälzkreises | $d_{w2}$ |
| Aussendurchmesser | DA |
| Innendurchmesser | DI |
| Aussendurchmesser | DWA |
| Gemeinlot | GL |
| Gemeinlotfußpunkte | GLF1, GLF2 |
| Gemeinlotvektor | GLV |
| konzentrische Kreise | K1, K2 |
| Stirnseitige Kegelfläche | KE |
| Längsachsen | LA, LA1, LA2, LA3 |
| Lotfusspunkte | LF1, LF2 |
| Berührebenennormale | $\vec{n}$ |
| Werkzeugdrehzahl | $n_1$ |
| Werkstückdrehzahl | $n_2$ |
| Rotationsachse des Werkzeugs (Werkzeugachse) | R1 |
| Berührradiusvektor des Werkzeugs 100 | $\vec{r}_1$ |
| Rotationsachse des Werkstücks (Werkstückachse) | R2 |
| Berührradiusvektor des Werkstücks 50 | $\vec{r}_2$ |
| Ringstärke | RS |
| Schwenkachse | SA |
| Stirnebene | SE |
| Hubbewegung | $s_{hx}$ |
| Axialvorschubs | $s_{ax}$ |
| Axialvorschubvektor | $\vec{s}_{ax}$ |
| Differentialvorschub | $s_D$ |
| Radialvorschub | $s_{rad}$ |
| Schnittpunkt | SP |
| Effektiver Achskreuzwinkel | $\Sigma_{eff}$ |
| Achskreuzwinkel | $\Sigma$ |
| Vorschubbewegung | VB |
| Betrag der Schnittgeschwindigkeit | $v_c$ |
| Schnittgeschwindigkeitsvektor | $\vec{v}_c$ |
| Betrag des Geschwindigkeitsvektors Wälzschälwerkzeug | $v_1$ |
| Geschwindigkeitsvektor Wälzschälwerkzeug | |
| Betrag des Geschwindigkeitsvektors Werkstück | $v_2$ |
| Geschwindigkeitsvektor Werkstück | $\vec{v}_2$ |
| Werkzeugwälzkreis | W1 |
| Wälzkreis des Werkstücks | W2 |
| Rotation um die Achse R1 | $\omega 1$ |
| Rotation um die Achse R2 | $\omega 2$ |

**Patentansprüche**

1. Verfahren zum Wälzschälen eines Werkstücks (50) mit aussenliegender, rotationssymmetrischer, periodischer Struktur (51, 52) unter Einsatz eines Wälzschälwerkzeugs, das mehrere Schneiden umfasst, mit den folgenden Schritten:

   - Drehen des Wälzschälwerkzeugs um eine erste Rotationsachse (R1),
   - gekoppeltes Drehen des Werkstücks (50) um eine zweite Rotationsachse (R2),
   - Ausführen einer axialen Vorschubbewegung (VB) des Wälzschälwerkzeugs in Bezug zu dem Werkstück (50) in einer Richtung parallel zur zweiten Rotationsachse (R2),

   dadurch gekennzeichnet, dass die beiden Rotationsachsen (R1, R2) während des Wälzschälens mit einem Achskreuzwinkel ($\Sigma$) windschief relativ zueinander angestellt sind, wobei dieser Achskreuzwinkel ($\Sigma$) stets ungleich Null ist, und dadurch gekennzeichnet, dass es sich bei dem Wälzschälwerkzeug um einen Innenschälring (100) handelt, der

   - einen Innenraum (113) aufspannt,
   - eine Mehrzahl von Schneidzähnen (111) aufweist, wobei an jedem Schneidzahn (111) mindestens eine Schneidkante, eine Schneidkopfspitze (122) und eine Spanfläche (121) angebracht sind,
   - wobei die Spanflächen (121) aller Schneidzähne (111) bezüglich der ersten Rotationsachse (R1) rotationssymmetrisch an einer Stirnebene (SE) oder an einer stirnseitigen Kegelfläche (KE) des Innenschälrings (100) angeordnet sind, und
   - wobei die Schneidzähne (111) in den Innenraum (113) ragen und in Richtung der ersten Rotationsachse (R1) zeigen.

2. Verfahren nach Anspruch 1, dadurch gekennzeichnet, dass die Spanflächen (121) einzeln gegenüber der Stirnebene (SE) oder stirnseitigen Kegelfläche (KE) verkippt angeordnet sind.

3. Verfahren nach Anspruch 1 oder 2, dadurch gekennzeichnet, dass der Innenschälring (100) einen ringförmigen Grundkörper (112) mit einer Innenkontur oder Innenmantelfläche (114) aufweist, die zylindrisch oder kegelig ist.

4. Verfahren nach Anspruch 1, 2 oder 3, dadurch gekennzeichnet, dass die Spanflächen (121) als ebene Flächen oder als gekrümmte Flächen ausgebildet sind.

5. Verfahren nach Anspruch 1, 2 oder 3, dadurch gekennzeichnet, dass das Werkstück (50) einen Aussendurchmesser (DWA) und der Innenschälring (100) einen Mindestinnendurchmesser aufweist, der mindestens 1,5 mal so groß ist wie der maximale Aussendurchmesser (DWA) des Werkstücks (50).

6. Verfahren nach Anspruch 1, 2 oder 3, dadurch gekennzeichnet, dass das Werkstück (50) einen Wälzkreisdurchmesser ($d_{w2}$) und der Innenschälring (100) einen Wälzkreisdurchmesser ($d_{w1}$) aufweist, der mindestens 1,5 mal so groß ist wie der Wälzkreisdurchmesser ($d_{w2}$) des Werkstücks (50).

7. Verfahren nach Anspruch 5, dadurch gekennzeichnet, dass der Mindestinnendurchmesser mindestens 2 mal so groß ist wie der maximale Aussendurchmesser (DWA) des Werkstücks (50).

8. Verfahren nach Anspruch 6, dadurch gekennzeichnet, dass der Wälzkreisdurchmesser ($d_{w1}$) des Innenschälrings (100) mindestens 2 mal so groß ist wie der Wälzkreisdurchmesser ($d_{w2}$) des Werkstücks (50).

9. Verfahren nach einem der Ansprüche 1 bis 8, dadurch gekennzeichnet, dass der Innenschälring (100) während des Wälzschälens zum Werkstück (50) hingeneigt oder vom Werkstück (50) weggeneigt ist.

10. Vorrichtung (200) zum Wälzschälen eines Werkstücks (50) mit rotationssymmetrischer, periodischer, aussenliegender Struktur (51, 52) unter Einsatz eines Wälzschälwerkzeugs, mit:

    - einer Werkzeugspindel (170) zum Befestigen des Wälzschälwerkzeugs,
    - einer Werkstückspindel (180) zum Befestigen des Werkstücks (50),
    - Antrieben zum gekoppelten Ausführen einer Vorschubbewegung (VB) und zum gekoppelten Rotieren des Wälzschälwerkzeugs (100) samt Werkzeugspindel (170) um eine erste Rotationsachse (R1) und des Werkstücks (50) samt Werkstückspindel (180) um eine zweite Rotationsachse (R2),

**dadurch gekennzeichnet, dass**

- das Wälzschälwerkzeug die Form eines Innenschälrings (100) aufweist, der

- einen Innenraum (113) aufspannt,
- eine Mehrzahl von Schneidzähnen (111) aufweist, wobei an jedem Schneidzahn (111) mindestens eine Schneidkante, eine Schneidkopfspitze (122) und eine Spanfläche (121) angebracht sind,
- wobei die Spanflächen (121) aller Schneidzähne (111) bezüglich der ersten Rotationsachse (R1) rotationssymmetrisch an einer Stirnebene (SE) oder an einer stirnseitigen Kegelfläche (KE) des Innenschälrings (100) angeordnet sind, und
- wobei die Schneidzähne (111) in den Innenraum (113) ragen und in Richtung der ersten Rotationsachse (R1) zeigen

und **dadurch gekennzeichnet, dass** es sich bei den Antrieben zum gekoppelten Ausführen einer Vorschubbewegung (VB) und zum gekoppelten Rotieren des Wälzschälwerkzeugs (100) samt Werkzeugspindel (170) um numerisch kontrollierte Antriebe handelt, und dass die Vorrichtung (200) eine numerische Steuerung (201) umfasst oder mit einer numerischen Steuerung (201) verbindbar ist, die dazu ausgelegt ist während des Wälzschälens einen Achskreuzwinkel ($\Sigma$) vorzugeben, um die beiden Rotationsachsen (R1, R2) während des Wälzschälens windschief relativ zueinander anzustellen, wobei dieser Achskreuzwinkel ($\Sigma$) stets ungleich Null ist.

11. Vorrichtung (200) nach Anspruch 10, **dadurch gekennzeichnet, dass** der Innenschälring (100) einen kreisrunden Innenraum (113) aufspannt.

12. Vorrichtung (200) nach Anspruch 10 oder 11, **dadurch gekennzeichnet, dass** die Spanflächen (121) einzeln gegenüber der Stirnebene (SE) oder stirnseitigen Kegelfläche (KE) verkippt angeordnet sind.

13. Vorrichtung (200) nach Anspruch 10, 11 oder 12, **dadurch gekennzeichnet, dass** das Werkstück (50) einen maximalen Aussendurchmesser (DWA) hat und der Innenschälring (100) einen Mindestinnendurchmesser aufweist, der mindestens 1,5 mal so groß ist wie der Aussendurchmesser (DWA) des Werkstücks (50).

14. Vorrichtung (200) nach Anspruch 10, 11 oder 12, **dadurch gekennzeichnet, dass** das Werkstück (50) einen Wälzkreisdurchmesser ($d_{w2}$) und der Innenschälring (100) einen Wälzkreisdurchmesser ($d_{w1}$) aufweist, der mindestens 1,5 mal so groß ist wie der Wälzkreisdurchmesser ($d_{w2}$) des Werkstücks (50).

15. Vorrichtung (200) nach Anspruch 13, **dadurch gekennzeichnet, dass** der Mindestinnendurchmesser mindestens 2 mal so groß ist wie der maximale Aussendurchmesser (DWA) des Werkstücks (50).

16. Vorrichtung (200) nach Anspruch 14, **dadurch gekennzeichnet, dass** der Wälzkreisdurchmesser ($d_{w1}$) des Innenschälrings (100) mindestens 2 mal so groß ist wie der Wälzkreisdurchmesser ($d_{w2}$) des Werkstücks (50).

17. Vorrichtung (200) nach einem der Ansprüche 10 bis 16, **dadurch gekennzeichnet, dass** die numerische Steuerung (201) dazu ausgelegt ist während des Wälzschälen den Innenschälring (100) zum Werkstück (50) hin oder vom Werkstück (50) weg zu neigen, wobei vorzugsweise ein Neigungswinkel ($\delta$) im Bereich zwischen -30 Grad und +30 Grad vorgebbar ist.

18. Vorrichtung (200) nach einem der Ansprüche 10 bis 17, **dadurch gekennzeichnet, dass** der Innenschälring (100) einen maximalen Aussendurchmesser (DA) hat und die Vorrichtung (200) einen Arbeitsraum (AR) mit einer Maximalabmessung in Achsabstandsrichtung der ersten Rotationsachse (R1) von der zweiten Rotationsachse (R2) hat, der maximal 50% grösser ist als der maximale Aussendurchmesser des Innenschälrings (100).

**Claims**

1. Method for power skiving of a work piece (50) having an outer rotationally symmetrical periodical structure (51, 52) with application of a power skiving tool comprising plural cutting edges, with the following steps:

- rotating the skiving tool about a first rotation axis (R1),
- coupledly rotating the work piece (50) about a second rotation axis (R2),
- performing an axial feed movement (VB) of the skiving tool with respect to the work piece (50) in a direction parallel to the second rotation axis (R2),

**characterized in that** during the power skiving the two rotation axes (R1, R2) are set skew relative to each other with an intersection angle of axes ($\Sigma$), whereby said intersection angle of axes ($\Sigma$) always is different from zero, and **characterized in that** the skiving tool concerns an inside skiving ring (100), which

- spans an interior space (113),
- comprises a plurality of cutting teeth (111), wherein at least one cutting edge, one cutting head tip (112) and one cutting face (121) are provided on each cutting tooth (111),
- wherein the cutting faces (121) of all the cutting teeth (111) are arranged rotationally symmetrical with respect to the first rotation axis (R1) on a front plane (SE) or a front-side cone surface (KE) of the inside skiving ring (100), and
- wherein the cutting teeth (111) project into the interior space (113) and point in the direction of the first rotation axis (R1).

2. Method according to claim 1, **characterized in that** the cutting faces (121) are arranged individually inclined with respect to the front plane (SE) or the front-side cone surface (KE).

3. Method according to claim 1 or 2, **characterized in that** the inside skiving ring (100) has an annular base body (112), which has an inner contour or inner mantle surface (114) that is cylindrical or conical.

4. Method according to claim 1, 2 or 3, **characterized in that** the cutting faces (121) are formed as plane surfaces or as curved surfaces.

5. Method according to claim 1, 2 or 3, **characterized in that** the work piece (50) has an outer diameter (DWA) and the inside skiving ring (100) has a minimum inner diameter, which is at least 1,5 times as large as the maximum outer diameter (DWA) of the work piece (50).

6. Method according to claim 1, 2 or 3, **characterized in that** the work piece (50) has a rolling circle diameter ($d_{w2}$) and the inside skiving ring (100) has a rolling circle diameter ($d_{w1}$), which is at least 1,5 times as large as the rolling circle diameter ($d_{w2}$) of the work piece (50).

7. Method according to claim 5, **characterized in that** the minimum inner diameter is at least two times as large as the maximum outer diameter (DWA) of the work piece (50).

8. Method according to claim 6, **characterized in that** the rolling circle diameter ($d_{w1}$) of the inside skiving ring (100) is at least two times as large as the rolling circle diameter ($d_{w2}$) of the work piece (50)

9. Method according to any one of the claims 1 to 8, **characterized in that** the inside skiving ring (100) is inclined towards the work piece (50) or away from the work piece (50) during the skiving.

10. Apparatus (200) for power skiving of a work piece (50) with a rotationally symmetrical periodical outer structure (51, 52) with application of a power skiving tool, with :

- a tool spindle (170) for fixing the skiving tool,
- a work piece spindle (180) for fixing the work piece (50),
- drives for coupledly performing a feed movement (VB) and for coupledly rotating the skiving tool (100) together with the tool spindle (170) about a first rotation axis (R1) and of the work piece (50) together with the work piece spindle (180) about a second rotation axis (R2),

**characterized in that**

- the skiving tool has the form of an inside skiving ring (100), which

- spans an interior space (113),

- comprises a plurality of cutting teeth (111), wherein at least one cutting edge, one cutting head tip (122) and one cutting face (121) are provided on each cutting tooth (111),
- wherein the cutting faces (121) of all the cutting teeth (111) are arranged rotationally symmetrically with respect to the first rotation axis (R1) on a front plane (SE) or a front-side cone surface (KE) of the inside skiving ring (100), and
- wherein the cutting teeth (111) project into the interior space (113) and point in the direction of the first rotation axis (R1),

and **characterized in that** the drives for coupledly performing a feed movement (VB) and for coupledly rotating the skiving tool (100) together with the tool spindle (170) concern numerically controlled drives, and that the apparatus comprises a numerical control (201) or is connectable with a numerical control (201), which is designed to prescribe an intersection angle of axes ($\Sigma$) during the skiving, so as to set the two rotation axes (R1, R2) skew relative to each other during the skiving.

11. Apparatus (200) according to claim 10, **characterized in that** the inside skiving ring (100) spans a circular interior space (113).

12. Apparatus (200) according to claim 10 or 11, **characterized in that** the cutting faces (121) are arranged individually inclined with respect to the front plane (SE) or the front side cone surface (KE).

13. Apparatus (200) according to claim 10, 11 or 12, **characterized in that** the work piece (50) has a maximum outer diameter (DWA) and the inside skiving ring (100) has a minimum inner diameter, which is at least 1.5 times as large as the outer diameter (DWA) of the work piece (50).

14. Apparatus (200) according to claim 10, 11 or 12, **characterized in that** the work piece (50) has a rolling circle diameter ($d_{w2}$) and the inside skiving ring (100) has a rolling circle diameter ($d_{w1}$), which is at least 1.5 times as large as the rolling circle diameter ($d_{w2}$) of the work piece (50).

15. Apparatus (200) according to claim 13, **characterized in that** the minimum inner diameter is at least 2 times as large as the maximum outer diameter (DWA) of the work piece (50).

16. Apparatus (200) according to claim 14, **characterized in that** the rolling circle diameter ($d_{w1}$) of the inside skiving ring (100) is at least 2 times as large as the rolling circle diameter ($d_{w2}$) of the work piece (50).

17. Apparatus (200) according to anyone of the claims 10 to 16, **characterized in that** the numerical control (201) is designed to incline the inside skiving ring (100) towards the work piece (50) or away from the work piece (50) during the skiving, wherein preferably a tilt angle ($\delta$) in the range between -30 degree and +30 degree is prescribable.

18. Apparatus (200) according to anyone of the claims 10 to 17, **characterized in that** the inside skiving ring (100) has a maximum outer diameter (DA) and the apparatus (200) has a work space (AR) having a maximum dimension in the direction of the distance between axes from the first rotation axis (R1) to the second rotation axis (R2), which is at maximum 50% greater than the maximum outer diameter of the inside skiving ring (100).

**Revendications**

1. Procédé de taillage par développante d'une pièce (50) présentant une structure (51, 52) périodique extérieure à symétrie de rotation à l'aide d'un outil de taillage par développante comprenant plusieurs lames, le procédé comprenant les étapes consistant à :

- faire tourner l'outil de taillage par développante autour d'un premier axe de rotation (R1),
- faire tourner de façon couplée la pièce (50) autour d'un deuxième axe de rotation (R2),
- réaliser un mouvement d'avance axial (VB) de l'outil de taillage par développante par rapport à la pièce (50) dans une direction parallèle au deuxième axe de rotation (R2),

**caractérisé en ce que** les deux axes de rotation (R1, R2), pendant le taillage par développante, sont réglés de manière inclinée par rapport à l'autre selon un angle d'intersection ($\Sigma$), cet angle d'intersection ($\Sigma$) étant non nul, et **caractérisé en ce que** l'outil de taillage par développante est une bague de taillage à denture intérieure (100) qui

- délimite un espace intérieur (113),
- présente une pluralité de dents de coupe (111), au moins une arête de coupe, une extrémité de tête de coupe (122) et une face d'attaque (121) étant agencées sur chaque dent de coupe (111),
- les faces d'attaque (121) de toutes les dents de coupe (111) sont agencées sur un plan frontal (SE) ou une surface conique côté frontal (KE) de la bague de taillage à denture interne (100) de manière symétrique en rotation par rapport au premier axe de rotation (R1), et
- les dents de coupe (111) font saillie dans l'espace intérieur (113) et sont orientées en direction du premier axe de rotation (R1).

2. Procédé selon la revendication 1, **caractérisé en ce que** les faces d'attaque (121) sont agencées inclinées par rapport au plan frontal (SE) ou à la surface conique côté frontal (KE).

3. Procédé selon la revendication 1 ou 2, **caractérisé en ce que** la bague de taillage à denture intérieure (100) présente un corps de base annulaire (112) avec un contour intérieur ou une surface enveloppante intérieure (114) qui est cylindrique ou conique.

4. Procédé selon la revendication 1, 2 ou 3, **caractérisé en ce que** les faces d'attaque (121) sont réalisées sous la forme de surfaces planes ou de surfaces courbées.

5. Procédé selon la revendication 1, 2 ou 3, **caractérisé en ce que** la pièce (50) présente un diamètre extérieur (DWA) et la bague de taillage à denture intérieure (100) un diamètre intérieur minimum qui est au moins 1,5 fois plus grand que le diamètre extérieur maximal (DWA) de la pièce (50).

6. Procédé selon la revendication 1, 2 ou 3, **caractérisé en ce que** la pièce (50) présente un diamètre de cercle de roulement ($d_{w2}$) et la bague de taillage à denture intérieure (100) un diamètre de cercle de roulement ($d_{w1}$) qui est au moins 1,5 fois plus grand que le diamètre de cercle de roulement ($d_{w2}$) de la pièce (50).

7. Procédé selon la revendication 5, **caractérisé en ce que** le diamètre intérieur minimum est au moins 2 fois plus grand que le diamètre extérieur maximal (DWA) de la pièce (50).

8. Procédé selon la revendication 6, **caractérisé en ce que** le diamètre de cercle de roulement ($d_{w1}$) de la bague de taillage à denture intérieure (100) est au moins 2 fois plus grand que le diamètre de cercle de roulement ($d_{w2}$) de la pièce (50).

9. Procédé selon l'une des revendications 1 à 8, **caractérisé en ce que** la bague de taillage à denture intérieure (100), pendant le taillage, est inclinée vers la pièce (50) ou à l'opposé de la pièce (50).

10. Dispositif (200) pour tailler par développante une pièce (50) présentant une structure (51, 52) périodique extérieure à symétrie de rotation à l'aide d'un outil de taillage par développante, comprenant :

- une broche d'outil (170) pour fixer l'outil de taillage par développante,
- une broche de pièce (180) pour fixer la pièce (50),
- des entraînements pour effectuer de façon couplée un mouvement d'avance (VB) et pour faire tourner de façon couplée l'outil de taillage par développante (100) avec la broche d'outil (170) autour d'un premier axe de rotation (R1), et la pièce (50) avec la broche de pièce (180) autour d'un deuxième axe de rotation (R2),

**caractérisé en ce que**

- l'outil de taillage par développante présente la forme d'une bague de taillage à denture intérieure (100), qui

- délimite un espace intérieur (113),
- présente une pluralité de dents de coupe (111), au moins une arête de coupe, une extrémité de tête de coupe (122) et une face d'attaque (121) étant agencées sur chaque dent de coupe (111),
- les faces d'attaque (121) de toutes les dents de coupe (111) sont agencées sur un plan frontal (SE) ou sur une surface conique côté frontal (KE) de la bague de taillage à denture intérieure (100) de façon symétrique en rotation par rapport au premier axe de rotation (R1), et
- les dents de coupe (111) font saillie dans l'espace intérieur (113) et sont orientées en direction du premier axe de rotation (R1),

et **caractérisé en ce que**

les entraînements pour effectuer de façon couplée un mouvement d'avance (VB) et pour faire tourner de façon couplée l'outil de taillage par développante (100) avec la broche d'outil (170) sont des entraînements à commande numérique, et **en ce que** le dispositif (200) comprend une commande numérique (201) ou peut être raccordé à une commande numérique (201) qui est conçue pour, pendant le taillage par développante, déterminer un angle d'intersection ($\Sigma$) pour pouvoir régler les deux axes de rotation (R1, R2) pendant le taillage par développante de façon inclinée l'un par rapport à l'autre, cet angle d'intersection ($\Sigma$) étant non nul.

11. Dispositif (200) selon la revendication 10, **caractérisé en ce que** la bague de taillage à denture intérieure (100) délimite un espace intérieur circulaire (113).

12. Dispositif (200) selon la revendication 10 ou 11, **caractérisé en ce que** les faces d'attaque (121) sont agencées inclinées par rapport au plan frontal (SE) ou à la surface conique côté frontal (KE).

13. Dispositif (200) selon la revendication 10, 11 ou 12, **caractérisé en ce que** la pièce (50) a un diamètre extérieur maximal (DWA) et **en ce que** la bague de taillage à denture intérieure (100) présente un diamètre intérieur minimum qui est au moins 1,5 fois plus grand que le diamètre extérieur (DWA) de la pièce (50).

14. Dispositif (200) selon la revendication 10, 11 ou 12, **caractérisé en ce que** la pièce (50) présente un diamètre de cercle de roulement ($d_{w2}$) et la bague de taillage à denture intérieure (100) un diamètre de cercle de roulement ($d_{w1}$) qui est au moins 1,5 fois plus grand que le diamètre de cercle de roulement ($d_{w2}$) de la pièce (50).

15. Dispositif (200) selon la revendication 13, **caractérisé en ce que** le diamètre intérieur minimum est au moins 2 fois plus grand que le diamètre extérieur maximal (DWA) de la pièce (50).

16. Dispositif (200) selon la revendication 14, **caractérisé en ce que** le diamètre de cercle de roulement ($d_{w1}$) de la bague de taillage à denture intérieure (100) est au moins 2 fois plus grand que le diamètre de cercle de roulement ($d_{w2}$) de la pièce (50).

17. Dispositif (200) selon l'une des revendications 10 à 16, **caractérisé en ce que** la commande numérique (201) est conçue pour, pendant le taillage par développante, incliner la bague de taillage à denture intérieure (100) vers la pièce (50) ou à l'opposé de la pièce (50), un angle d'inclinaison ($\delta$) compris entre -30 degrés et + 30 degrés pouvant de préférence être prédéfini.

18. Dispositif (200) selon l'une des revendications 10 à 17, **caractérisé en ce que** la bague de taillage à denture intérieure (100) a un diamètre extérieur maximal (DA) et **en ce que** le dispositif (200) a un espace de travail (AR) avec des dimensions maximales dans le sens de l'espacement axial entre le premier axe de rotation (R1) et le deuxième axe de rotation (R2), qui est au maximum 50 % plus grand que le diamètre extérieur maximal de la bague de taillage à denture intérieur (100).

**Fig. 1**

**Fig. 2A**

**Fig. 2B**

10

R2

R1

Σ

AK=BP

**Fig. 3A**

R1

$\alpha_{Ko}$

R2

20

10

AA

AR

**Fig. 3B**

10

R2

Σ

R1

20

AK=BP

**Fig. 4A**

R2

R1

20

10

AA

AR

**Fig. 4B**

**Fig. 5A**

**Fig. 5B**

Fig. 6

AP=BP

SP

R1

δ

$\vec{v}_2$

$\Sigma_{eff}$

$\vec{v}_1$

δ

BE

113

100

114

Fig. 7

**Fig. 8**

**Fig. 9**

**Fig. 10**

**Fig. 11A**

**Fig. 11B**

DI

R1

114

111

122

113

100

120

121

112

KE

DA

**Fig. 12A**

114

113

R1

112

120

121

R2

50

DWA

**Fig. 12B**

LA

120

K2

VB

111

121

51

52

54

50

R2

K1

**Fig. 13**

Fig. 14

**Fig. 15A**

Fig.15B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 243514
- DE 202011050054
- DE 3915976 A1
- WO 2010060733 A1
- EP 11167703 A